# EUROPEAN PATENT APPLICATION

(11) **EP 4 580 289 A1**
(43) Date of publication of application: **02.07.2025**
(21) Application number: 23851742.9
(22) Date of filing: 07.08.2023
(51) Int. Cl.: H04W 72/20, H04L 5/00

(54) **METHOD AND APPARATUS USED IN WIRELESS COMMUNICATION NODE**

(30) Priority: 12.08.2022 CN 202210966575; 17.08.2022 CN 202210986266
(71) Applicant: SHANGHAI LANGBO COMMUNICATION TECHNOLOGY COMPANY LIMITED, Shanghai 200240 (CN)
(72) Inventor: HU, Yang, Shanghai 201206 (CN); ZHANG, Xiaobo, Shanghai 201206 (CN)
(74) Representative: Laqua, Bernd Christian Kurt
(86) International application number: PCT/CN2023/111372
(87) International publication number: WO 2024/032521

(57) **Abstract**

Disclosed in the present application is a method and an apparatus used in a wireless communication node. A first receiver receiving first signaling, wherein the first signaling is used to determine a target indication value, and the target indication value is a non-negative integer; a first transceiver receiving a first signal, or sending the first signal; wherein a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set.

## Description

### Technical Field

The present application relates to a transmission method and an apparatus in wireless communication systems, in particular a wireless signal transmission method and an apparatus in a wireless communication system that supports cellular networks.

### Background Art

5G NR supports diversified UE (User Equipment), including conventional UE, UE with high processing capacity, and UE reduced capabilities (RedCap UE). How to achieve support for RedCap UE is an important topic for 5G NR.

### Summary of the Invention

Resource assignment for RedCap UE is an aspect that must be considered. It should be noted that the scenario of supporting RedCap UE is used as an example in the above description; the present application is similarly applicable to other scenarios, such as those only supporting conventional UE, those supporting UE with high processing capabilities, eMBB (Enhance Mobile Broadband), URLLC (Ultra Reliable and Low Latency Communication), MBS (Multicast Broadcast Services), IoT (Internet of Things), Internet of Vehicles, NTN (non-terrestrial networks), shared spectrum and the like, and achieves similar technical effects. In addition, the adoption of unified solutions for different scenarios (including but not limited to those that support RedCap UE, those that only support conventional UE, and those that support UE with high processing capabilities, eMBB, URLLC, MBS, IoT, Internet of Vehicles, NTN, and shared spectrum) may also help reduce hardware complexity and cost, or improve performance. Embodiments of any of the nodes of the present application and the features of the embodiments may be applied to any other node without conflict. The embodiments of the present application and the features in the embodiments may be arbitrarily combined with one another without conflict.

As one embodiment, the terminology in the present application is interpreted with reference to the definitions in the 3GPP TS36 series-specification protocol.

As one embodiment, the terminology in the present application is interpreted with reference to the definitions in the 3GPP TS38 series-specification protocol.

As one embodiment, the terminology in the present application is interpreted with reference to the definitions in the 3GPP TS37 series-specification protocol.

As one embodiment, the terminology in the present application is interpreted with reference to the definitions in the IEEE (Institute of Electrical and Electronics Engineers) specification protocol.

Disclosed in the present application is a method used in a first wireless communication node, characterized in that, the method comprises:
receiving first signaling, wherein the first signaling is used for determining a target indication value, and the target indication value is a non-negative integer;
receiving a first signal, or sending the first signal;
wherein a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value, and the number of resource blocks occupied by the first signal is related to the reference length value.

As one embodiment, an advantage of the method described above includes: UE with reduced adaptability.

As one embodiment, an advantage of the method described above includes: enhanced adaptability to diversified UE types.

As one embodiment, an advantage of the method described above includes: enhanced adaptability between BWP configuration and unconventional UEs (including RedCap UEs, UEs with high processing capabilities, and the like).

As one embodiment, an advantage of the method described above includes: improved transmission performance.

As one embodiment, an advantage of the method described above includes: improved flexibility.

As one embodiment, an advantage of the method described above includes: improved utilization efficiency of bits in control signaling.

As one embodiment, an advantage of the method described above includes: optimized resource assignment and improved resource utilization.

As one embodiment, an advantage of the method described above includes: avoiding the scheduled frequency domain resources from exceeding the processing capabilities of UE.

As one embodiment, an advantage of the method described above includes: good compatibility.

As one embodiment, an advantage of the method described above includes: few changes to the existing 3GPP standards.

According to one aspect of the present application, the methods described above are characterized in that,
the difference value between any two adjacent numerical values in the second numerical-value set is equal to a second difference value; the second difference value is not equal to the first difference value, and the second difference value is a positive integer.

According to one aspect of the present application, the methods described above are characterized in that,
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is equal to the ratio of the reference length value to the second difference value; the first target indication value is equal to 1 or -1, the second target numerical value is equal to a first reference numerical value or the product of the first reference numerical value and -1, the first reference numerical value is equal to one of the size of the initial BWP and the size of CORESET 0, and the third target numerical value is related to the first reference numerical value.

According to one aspect of the present application, the methods described above are characterized in that,
the cardinal number of the first numerical-value set is equal to the first reference numerical value, and the cardinal number of the second numerical-value set is not greater than the cardinal number of the first numerical-value set.

According to one aspect of the present application, the methods described above are characterized in that,
the first difference value is greater than the second difference value.

According to one aspect of the present application, the methods described above are characterized in that,
the first difference value is related to the size of an activated BWP.

According to one aspect of the present application, the methods described above are characterized in that,
the second difference value is equal to 1 or is related to the capabilities of the first node.

According to one aspect of the present application, the methods described above are characterized in that,
the index of the starting resource block occupied by the first signal is equal to the reference start index value and the number of the resource blocks occupied by the first signal is equal to the reference length value.

According to one aspect of the present application, the methods described above are characterized in that,
the reference start index value is equal to a non-negative integer multiple of the first difference value.

According to one aspect of the present application, the methods described above are characterized in that,
the reference length value and the first difference value satisfy the following relationship: the remainder obtained by dividing the reference length value by the first difference value is greater than zero.

As one embodiment, an advantage of the method described above includes: where control signaling bits are limited, the number of resource blocks allowed to be scheduled is not a positive integer multiple of the first difference value, which improves scheduling flexibility and facilitates improvement in transmission performance or resource utilization efficiency.

According to one aspect of the present application, the methods described above are characterized in that,
the reference length value and the first difference value are coprime.

According to one aspect of the present application, the methods described above are characterized in that,
the first signaling comprises a first field, wherein the first field in the first signaling is used to determine the target indication value; the first field in the first signaling in the range of values for an RIV is a first indication-value set, the first indication-value set comprises a plurality of indication values, and each indication value in the first indication-value set corresponds to a first type start index value and a first type length value; for any indication value in the first indication-value set: the corresponding first type start index value is equal to one numerical value in the first numerical-value set and the corresponding first type length value is equal to one numerical value in the second numerical-value set.

According to one aspect of the present application, the methods described above are characterized in that,
the target indication value is any indication value in the first indication-value set; the reference start index value is the first type start index value corresponding to the target indication value, and the reference length value is the first type length value corresponding to the target indication value.

Disclosed in the present application is a method used in a second wireless communication node, characterized in that, the method comprises:
sending first signaling, wherein the first signaling is used for determining a target indication value, and the target indication value is a non-negative integer;
sending a first signal, or receiving the first signal;
wherein a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value, and the number of resource blocks occupied by the first signal is related to the reference length value.

According to one aspect of the present application, the methods described above are characterized in that,
the difference value between any two adjacent numerical values in the second numerical-value set is equal to a second difference value; the second difference value is not equal to the first difference value, and the second difference value is a positive integer.

According to one aspect of the present application, the methods described above are characterized in that,
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is equal to the ratio of the reference length value to the second difference value; the first target indication value is equal to 1 or -1, the second target numerical value is equal to a first reference numerical value or the product of the first reference numerical value and -1, the first reference numerical value is equal to one of the size of the initial BWP and the size of CORESET 0, and the third target numerical value is related to the first reference numerical value.

According to one aspect of the present application, the methods described above are characterized in that,
the cardinal number of the first numerical-value set is equal to the first reference numerical value, and the cardinal number of the second numerical-value set is not greater than the cardinal number of the first numerical-value set.

According to one aspect of the present application, the methods described above are characterized in that,
the first difference value is greater than the second difference value.

According to one aspect of the present application, the methods described above are characterized in that,
the first difference value is related to the size of an activated BWP.

According to one aspect of the present application, the methods described above are characterized in that,
the second difference value is equal to 1 or is related to the capabilities of the first node.

According to one aspect of the present application, the methods described above are characterized in that,
the index of the starting resource block occupied by the first signal is equal to the reference start index value and the number of the resource blocks occupied by the first signal is equal to the reference length value.

According to one aspect of the present application, the methods described above are characterized in that,
the reference start index value is equal to a non-negative integer multiple of the first difference value.

According to one aspect of the present application, the methods described above are characterized in that,
the reference length value and the first difference value satisfy the following relationship: the remainder obtained by dividing the reference length value by the first difference value is greater than zero.

According to one aspect of the present application, the methods described above are characterized in that,
the reference length value and the first difference value are coprime.

According to one aspect of the present application, the methods described above are characterized in that,
the first signaling comprises a first field, wherein the first field in the first signaling is used to determine the target indication value; the first field in the first signaling in the range of values for an RIV is a first indication-value set, the first indication-value set comprises a plurality of indication values, and each indication value in the first indication-value set corresponds to a first type start index value and a first type length value; for any indication value in the first indication-value set: the corresponding first type start index value is equal to one numerical value in the first numerical-value set and the corresponding first type length value is equal to one numerical value in the second numerical-value set.

According to one aspect of the present application, the methods described above are characterized in that,
the target indication value is any indication value in the first indication-value set; the reference start index value is the first type start index value corresponding to the target indication value, and the reference length value is the first type length value corresponding to the target indication value.

Disclosed in the present application is a first wireless communication node, characterized in that, the node comprises:
a first receiver receiving first signaling, wherein the first signaling is used to determine a target indication value, and the target indication value is a non-negative integer;
a first transceiver receiving a first signal, or sending the first signal;
wherein a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value, and the number of resource blocks occupied by the first signal is related to the reference length value.

Disclosed in the present application is a second wireless communication node, characterized in that, the node comprises:
a second transmitter sending first signaling, wherein the first signaling is used to determine a target indication value, and the target indication value is a non-negative integer;
a second transceiver sending a first signal, or receiving the first signal;
wherein a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value, and the number of resource blocks occupied by the first signal is related to the reference length value.

Disclosed in the present application is a method used in a first wireless communication node, characterized in that, the method comprises:
receiving first signaling, wherein the first signaling is used for determining a target indication value, and the target indication value is a non-negative integer;
receiving a first signal, or sending the first signal;
wherein the first difference value is related to the size of a BWP, and the first difference value is a positive integer greater than 1; the reference start index value is the index of a starting resource block occupied by the first signal, the target indication value has a corresponding relationship with the reference start index value, wherein the corresponding relationship between the target indication value and the reference start index value is related to the first difference value; the reference length value is the number of resource blocks occupied by the first signal, and the reference length value and the first difference value satisfy the following relationship: the remainder obtained by dividing the reference length value by the first difference value is greater than zero.

As one embodiment, an advantage of the method described above includes: UE with reduced adaptability.

As one embodiment, an advantage of the method described above includes: enhanced adaptability to diversified UE types.

As one embodiment, an advantage of the method described above includes: enhanced adaptability between BWP configuration and unconventional UEs (including RedCap UEs, UEs with high processing capabilities, and the like).

As one embodiment, an advantage of the method described above includes: improved transmission performance.

As one embodiment, an advantage of the method described above includes: improved flexibility.

As one embodiment, an advantage of the method described above includes: improved utilization efficiency of bits in control signaling.

As one embodiment, an advantage of the method described above includes: optimized resource assignment and improved resource utilization.

As one embodiment, an advantage of the method described above includes: where control signaling bits are limited, the number of resource blocks allowed to be scheduled is not a positive integer multiple of the first difference value, which improves scheduling flexibility and facilitates improvement in transmission performance or resource utilization efficiency.

As one embodiment, an advantage of the method described above includes: avoiding the scheduled frequency domain resources from exceeding the processing capabilities of UE.

As one embodiment, an advantage of the method described above includes: good compatibility.

As one embodiment, an advantage of the method described above includes: few changes to the existing 3GPP standards.

According to one aspect of the present application, the methods described above are characterized in that,
the reference start index value is equal to a non-negative integer multiple of the first difference value.

According to one aspect of the present application, the methods described above are characterized in that,
the target indication value corresponds to the reference start index value and the reference length value.

According to one aspect of the present application, the methods described above are characterized in that,
the reference length value depends on the target indication value

According to one aspect of the present application, the methods described above are characterized in that,
the expression "the target indication value has a corresponding relationship with the reference start index value, wherein the corresponding relationship between the target indication value and the reference start index value is related to the first difference value" comprises:
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is a positive integer not greater than the first reference numerical value minus the first intermediate value; the first target indication value is equal to 1 or -1, the second target numerical value is equal to the first reference numerical value or the product of the first reference numerical value and -1, the first reference numerical value is equal to one of the size of the initial BWP and the size of CORESET 0, and the third target numerical value is related to the first reference numerical value.

According to one aspect of the present application, the methods described above are characterized in that,
the expression "the target indication value has a corresponding relationship with the reference start index value, wherein the corresponding relationship between the target indication value and the reference start index value is related to the first difference value" comprises:
the target indication value is equal to the first intermediate value plus the product of the first reference numerical value and the second intermediate value minus the first reference numerical value; the first intermediate value is equal to the ratio of the reference start index value to the first difference value, the second intermediate value is a positive integer not greater than the first reference numerical value minus the first intermediate value; the first reference numerical value is equal to one of the size of the initial BWP and the size of CORESET 0.

According to one aspect of the present application, the methods described above are characterized in that,
the expression "the target indication value has a corresponding relationship with the reference start index value, wherein the corresponding relationship between the target indication value and the reference start index value is related to the first difference value" comprises:
the target indication value is equal to a third target numerical value minus the first intermediate value minus the product of the first reference numerical value and the second intermediate value; the first intermediate value is equal to the ratio of the reference start index value to the first difference value, the second intermediate value is a positive integer not greater than the first reference numerical value minus the first intermediate value; the first reference value is equal to one of the size of the initial BWP and the size of CORESET 0; the third target numerical value is related to the first reference numerical value.

According to one aspect of the present application, the methods described above are characterized in that,
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is equal to the ratio of the reference length value to the second difference value, wherein the second difference value is a positive integer; the first target indication value is equal to 1 or -1, the second target numerical value is equal to a first reference numerical value or the product of the first reference numerical value and -1, the first reference numerical value is equal to one of the size of the initial BWP and the size of CORESET 0, and the third target numerical value is related to the first reference numerical value.

According to one aspect of the present application, the methods described above are characterized in that,
the first signaling comprises a first field, wherein the first field in the first signaling is used to determine the target indication value; the first field in the first signaling in the range of values for an RIV is a first indication-value set, the first indication-value set comprises a plurality of indication values, and each indication value in the first indication-value set corresponds to a first type start index value and a first type length value; for any indication value in the first indication-value set: the corresponding first type start index value is equal to one numerical value in the first numerical-value set and the corresponding first type length value is equal to one numerical value in the second numerical-value set.

According to one aspect of the present application, the methods described above are characterized in that,
the target indication value is any indication value in the first indication-value set; the reference start index value is the first type start index value corresponding to the target indication value, and the reference length value is the first type length value corresponding to the target indication value.

According to one aspect of the present application, the methods described above are characterized in that,
the difference value between any two adjacent numerical values in the second numerical-value set is equal to a second difference value; the second difference value is not equal to the first difference value, and the second difference value is a positive integer.

According to one aspect of the present application, the methods described above are characterized in that,
the cardinal number of the first numerical-value set is equal to the first reference numerical value, and the cardinal number of the second numerical-value set is not greater than the cardinal number of the first numerical-value set.

According to one aspect of the present application, the methods described above are characterized in that,
the first difference value is greater than the second difference value.

According to one aspect of the present application, the methods described above are characterized in that,
the first difference value is related to the size of an activated BWP.

According to one aspect of the present application, the methods described above are characterized in that,
the second difference value is equal to 1 or is related to the capabilities of the first node.

According to one aspect of the present application, the methods described above are characterized in that,
the reference start index value is equal to a non-negative integer multiple of the first difference value.

According to one aspect of the present application, the methods described above are characterized in that,
the reference length value and the first difference value are coprime.

Disclosed in the present application is a method used in a second wireless communication node, characterized in that, the method comprises:
sending first signaling, wherein the first signaling is used for determining a target indication value, and the target indication value is a non-negative integer;
sending a first signal, or receiving the first signal;
wherein the first difference value is related to the size of a BWP, and the first difference value is a positive integer greater than 1; the reference start index value is the index of a starting resource block occupied by the first signal, the target indication value has a corresponding relationship with the reference start index value, wherein the corresponding relationship between the target indication value and the reference start index value is related to the first difference value; the reference length value is the number of resource blocks occupied by the first signal, and the reference length value and the first difference value satisfy the following relationship: the remainder obtained by dividing the reference length value by the first difference value is greater than zero.

According to one aspect of the present application, the methods described above are characterized in that,
the reference start index value is equal to a non-negative integer multiple of the first difference value.

According to one aspect of the present application, the methods described above are characterized in that,
the target indication value corresponds to the reference start index value and the reference length value.

According to one aspect of the present application, the methods described above are characterized in that,
the reference length value depends on the target indication value.

According to one aspect of the present application, the methods described above are characterized in that,
the expression "the target indication value has a corresponding relationship with the reference start index value, wherein the corresponding relationship between the target indication value and the reference start index value is related to the first difference value" comprises:
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is a positive integer not greater than the first reference numerical value minus the first intermediate value; the first target indication value is equal to 1 or -1, the second target numerical value is equal to the first reference numerical value or the product of the first reference numerical value and -1, the first reference numerical value is equal to one of the size of the initial BWP and the size of CORESET 0, and the third target numerical value is related to the first reference numerical value.

According to one aspect of the present application, the methods described above are characterized in that,
the expression "the target indication value has a corresponding relationship with the reference start index value, wherein the corresponding relationship between the target indication value and the reference start index value is related to the first difference value" comprises:
the target indication value is equal to the first intermediate value plus the product of the first reference numerical value and the second intermediate value minus the first reference numerical value; the first intermediate value is equal to the ratio of the reference start index value to the first difference value, the second intermediate value is a positive integer not greater than the first reference numerical value minus the first intermediate value; the first reference numerical value is equal to one of the size of the initial BWP and the size of CORESET 0.

According to one aspect of the present application, the methods described above are characterized in that,
the expression "the target indication value has a corresponding relationship with the reference start index value, wherein the corresponding relationship between the target indication value and the reference start index value is related to the first difference value" comprises:
the target indication value is equal to a third target numerical value minus the first intermediate value minus the product of the first reference numerical value and the second intermediate value; the first intermediate value is equal to the ratio of the reference start index value to the first difference value, the second intermediate value is a positive integer not greater than the first reference numerical value minus the first intermediate value; the first reference value is equal to one of the size of the initial BWP and the size of CORESET 0; the third target numerical value is related to the first reference numerical value.

According to one aspect of the present application, the methods described above are characterized in that,
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is equal to the ratio of the reference length value to the second difference value, wherein the second difference value is a positive integer; the first target indication value is equal to 1 or -1, the second target numerical value is equal to a first reference numerical value or the product of the first reference numerical value and -1, the first reference numerical value is equal to one of the size of the initial BWP and the size of CORESET 0, and the third target numerical value is related to the first reference numerical value.

According to one aspect of the present application, the methods described above are characterized in that,
the first signaling comprises a first field, wherein the first field in the first signaling is used to determine the target indication value; the first field in the first signaling in the range of values for an RIV is a first indication-value set, the first indication-value set comprises a plurality of indication values, and each indication value in the first indication-value set corresponds to a first type start index value and a first type length value; for any indication value in the first indication-value set: the corresponding first type start index value is equal to one numerical value in the first numerical-value set and the corresponding first type length value is equal to one numerical value in the second numerical-value set.

According to one aspect of the present application, the methods described above are characterized in that,
the target indication value is any indication value in the first indication-value set; the reference start index value is the first type start index value corresponding to the target indication value, and the reference length value is the first type length value corresponding to the target indication value.

According to one aspect of the present application, the methods described above are characterized in that,
the difference value between any two adjacent numerical values in the second numerical-value set is equal to a second difference value; the second difference value is not equal to the first difference value, and the second difference value is a positive integer.

According to one aspect of the present application, the methods described above are characterized in that,
the cardinal number of the first numerical-value set is equal to the first reference numerical value, and the cardinal number of the second numerical-value set is not greater than the cardinal number of the first numerical-value set.

According to one aspect of the present application, the methods described above are characterized in that,
the first difference value is greater than the second difference value.

According to one aspect of the present application, the methods described above are characterized in that,
the first difference value is related to the size of an activated BWP.

According to one aspect of the present application, the methods described above are characterized in that,
the second difference value is equal to 1 or is related to the capabilities of the receiver of the first signaling.

According to one aspect of the present application, the methods described above are characterized in that,
the reference start index value is equal to a non-negative integer multiple of the first difference value.

According to one aspect of the present application, the methods described above are characterized in that,
the reference length value and the first difference value are coprime.

Disclosed in the present application is a first wireless communication node, characterized in that, the node comprises:
a first receiver receiving first signaling, wherein the first signaling is used to determine a target indication value, and the target indication value is a non-negative integer;
a first transceiver receiving a first signal, or sending the first signal;
wherein the first difference value is related to the size of a BWP, and the first difference value is a positive integer greater than 1; the reference start index value is the index of a starting resource block occupied by the first signal, the target indication value has a corresponding relationship with the reference start index value, wherein the corresponding relationship between the target indication value and the reference start index value is related to the first difference value; the reference length value is the number of resource blocks occupied by the first signal, and the reference length value and the first difference value satisfy the following relationship: the remainder obtained by dividing the reference length value by the first difference value is greater than zero.

According to one aspect of the present application, the first node described above is characterized in that,
the reference start index value is equal to a non-negative integer multiple of the first difference value.

According to one aspect of the present application, the first node described above is characterized in that,
the target indication value corresponds to the reference start index value and the reference length value.

According to one aspect of the present application, the first node described above is characterized in that,
the reference length value depends on the target indication value.

According to one aspect of the present application, the first node described above is characterized in that,
the expression "the target indication value has a corresponding relationship with the reference start index value, wherein the corresponding relationship between the target indication value and the reference start index value is related to the first difference value" comprises:
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is a positive integer not greater than the first reference numerical value minus the first intermediate value; the first target indication value is equal to 1 or -1, the second target numerical value is equal to the first reference numerical value or the product of the first reference numerical value and -1, the first reference numerical value is equal to one of the size of the initial BWP and the size of CORESET 0, and the third target numerical value is related to the first reference numerical value.

According to one aspect of the present application, the first node described above is characterized in that,
the expression "the target indication value has a corresponding relationship with the reference start index value, wherein the corresponding relationship between the target indication value and the reference start index value is related to the first difference value" comprises:
the target indication value is equal to the first intermediate value plus the product of the first reference numerical value and the second intermediate value minus the first reference numerical value; the first intermediate value is equal to the ratio of the reference start index value to the first difference value, the second intermediate value is a positive integer not greater than the first reference numerical value minus the first intermediate value; the first reference numerical value is equal to one of the size of the initial BWP and the size of CORESET 0.

According to one aspect of the present application, the first node described above is characterized in that,
the expression "the target indication value has a corresponding relationship with the reference start index value, wherein the corresponding relationship between the target indication value and the reference start index value is related to the first difference value" comprises:
the target indication value is equal to a third target numerical value minus the first intermediate value minus the product of the first reference numerical value and the second intermediate value; the first intermediate value is equal to the ratio of the reference start index value to the first difference value, the second intermediate value is a positive integer not greater than the first reference numerical value minus the first intermediate value; the first reference value is equal to one of the size of the initial BWP and the size of CORESET 0; the third target numerical value is related to the first reference numerical value.

According to one aspect of the present application, the first node described above is characterized in that,
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is equal to the ratio of the reference length value to the second difference value, wherein the second difference value is a positive integer; the first target indication value is equal to 1 or -1, the second target numerical value is equal to a first reference numerical value or the product of the first reference numerical value and -1, the first reference numerical value is equal to one of the size of the initial BWP and the size of CORESET 0, and the third target numerical value is related to the first reference numerical value.

According to one aspect of the present application, the first node described above is characterized in that,
the first signaling comprises a first field, wherein the first field in the first signaling is used to determine the target indication value; the first field in the first signaling in the range of values for an RIV is a first indication-value set, the first indication-value set comprises a plurality of indication values, and each indication value in the first indication-value set corresponds to a first type start index value and a first type length value; for any indication value in the first indication-value set: the corresponding first type start index value is equal to one numerical value in the first numerical-value set and the corresponding first type length value is equal to one numerical value in the second numerical-value set.

According to one aspect of the present application, the first node described above is characterized in that,
the target indication value is any indication value in the first indication-value set; the reference start index value is the first type start index value corresponding to the target indication value, and the reference length value is the first type length value corresponding to the target indication value.

According to one aspect of the present application, the first node described above is characterized in that,
the difference value between any two adjacent numerical values in the second numerical-value set is equal to a second difference value; the second difference value is not equal to the first difference value, and the second difference value is a positive integer.

According to one aspect of the present application, the first node described above is characterized in that,
the cardinal number of the first numerical-value set is equal to the first reference numerical value, and the cardinal number of the second numerical-value set is not greater than the cardinal number of the first numerical-value set.

According to one aspect of the present application, the first node described above is characterized in that,
the first difference value is greater than the second difference value.

According to one aspect of the present application, the first node described above is characterized in that,
the first difference value is related to the size of an activated BWP.

According to one aspect of the present application, the first node described above is characterized in that,
the second difference value is equal to 1 or is related to the capabilities of the first node.

According to one aspect of the present application, the first node described above is characterized in that,
the reference start index value is equal to a non-negative integer multiple of the first difference value.

According to one aspect of the present application, the first node described above is characterized in that,
the reference length value and the first difference value are coprime.

Disclosed in the present application is a second wireless communication node, characterized in that, the node comprises:
a second transmitter sending first signaling, wherein the first signaling is used to determine a target indication value, and the target indication value is a non-negative integer;
a second transceiver sending a first signal, or receiving the first signal;
wherein the first difference value is related to the size of a BWP, and the first difference value is a positive integer greater than 1; the reference start index value is the index of a starting resource block occupied by the first signal, the target indication value has a corresponding relationship with the reference start index value, wherein the corresponding relationship between the target indication value and the reference start index value is related to the first difference value; the reference length value is the number of resource blocks occupied by the first signal, and the reference length value and the first difference value satisfy the following relationship: the remainder obtained by dividing the reference length value by the first difference value is greater than zero.

Disclosed in the present application is a method used in a first wireless communication node, characterized in that, the method comprises:
receiving first signaling, wherein the first signaling is used for determining a target indication value, and the target indication value is a non-negative integer;
wherein the first difference value is related to the size of a BWP, and the first difference value is a positive integer greater than 1; the reference start index value is the index of a starting resource block, the target indication value has a corresponding relationship with the reference start index value, wherein the corresponding relationship between the target indication value and the reference start index value is related to the first difference value; the reference length value is the number of assigned resource blocks, the target indication value corresponds to the reference length value, and the remainder obtained by dividing one numerical value in the range of values for the reference length value by the first difference value is greater than zero.

As one embodiment, an advantage of the method described above includes: UE with reduced adaptability.

As one embodiment, an advantage of the method described above includes: enhanced adaptability to diversified UE types.

As one embodiment, an advantage of the method described above includes: enhanced adaptability between BWP configuration and unconventional UEs (including RedCap UEs, UEs with high processing capabilities, and the like).

As one embodiment, an advantage of the method described above includes: improved transmission performance.

As one embodiment, an advantage of the method described above includes: improved flexibility.

As one embodiment, an advantage of the method described above includes: improved utilization efficiency of bits in control signaling.

As one embodiment, an advantage of the method described above includes: optimized resource assignment and improved resource utilization.

As one embodiment, an advantage of the method described above includes: where control signaling bits are limited, the number of resource blocks allowed to be scheduled is not a positive integer multiple of the first difference value, which improves scheduling flexibility and facilitates improvement in transmission performance or resource utilization efficiency.

As one embodiment, an advantage of the method described above includes: avoiding the scheduled frequency domain resources from exceeding the processing capabilities of UE.

As one embodiment, an advantage of the method described above includes: good compatibility.

As one embodiment, an advantage of the method described above includes: few changes to the existing 3GPP standards.

As one embodiment, the expression "the remainder obtained by dividing one numerical value in the range of values for the reference length value by the first difference value is greater than zero" comprises: the reference length value and the first difference value satisfy the following relationship: the remainder obtained by dividing the reference length value by the first difference value is greater than zero.

As one embodiment, the reference length value is the number of continuously assigned resource blocks.

As one embodiment, the reference length value is the number of virtual and continuously assigned resource blocks.

As one embodiment, the range of values for the reference length value comprises at least one positive integer.

As one embodiment, the range of values for the reference length value comprises a plurality of positive integers.

As one embodiment, the numerical values in the range of values for the reference length values are all positive integers.

As one embodiment, the greatest numerical value in the range of values for the reference length value is not greater than the first reference numerical value.

As one embodiment, the greatest numerical value in the range of values for the reference length value is not greater than 25.

As one embodiment, the greatest numerical value in the range of values for the reference length value is not greater than 26.

As one embodiment, the greatest numerical value in the range of values for the reference length value is not greater than 27.

As one embodiment, the greatest numerical value in the range of values for the reference length value is not greater than 28.

As one embodiment, the greatest numerical value in the range of values for the reference length value is not greater than 29.

As one embodiment, the greatest numerical value in the range of values for the reference length value is not greater than 30.

As one embodiment, the remainder obtained by dividing at least one numerical value in the range of values for the reference length value by the first difference value is greater than zero.

As one embodiment, the remainder obtained by dividing the reference length value by the first difference value is greater than zero.

As one embodiment, the first difference value is one of 2, 4, and 8.

According to one aspect of the present application, the methods described above are characterized in that,
the numerical values in the range of values for the reference start index value are all non-negative integer multiples of the first difference value.

As one embodiment, the range of values for the reference start index value comprises at least one non-negative integer.

As one embodiment, the range of values for the reference start index value comprises a plurality of non-negative integers.

As one embodiment, the numerical values in the range of values for the reference start index value are all non-negative integer.

As one embodiment, the smallest numerical value in the range of values for the reference start index value is equal to 0.

As one embodiment, the greatest numerical value in the range of values for the reference start index value is not greater than the product of the difference value of the first reference numerical value minus 1 and the first difference value.

According to one aspect of the present application, the methods described above are characterized in that,
receiving a first signal, or sending the first signal;
wherein the reference start index value is the index of a starting resource block occupied by the first signal and the reference length value is the number of resource blocks assigned to the first signal.

According to one aspect of the present application, the methods described above are characterized in that,
the reference length value depends on the target indication value.

According to one aspect of the present application, the methods described above are characterized in that,
the expression "the target indication value has a corresponding relationship with the reference start index value, wherein the corresponding relationship between the target indication value and the reference start index value is related to the first difference value" comprises:
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is a positive integer not greater than the first reference numerical value minus the first intermediate value; the first target indication value is equal to 1 or -1, the second target numerical value is equal to the first reference numerical value or the product of the first reference numerical value and -1, the first reference numerical value is equal to one of the size of the initial BWP and the size of CORESET 0, and the third target numerical value is related to the first reference numerical value.

According to one aspect of the present application, the methods described above are characterized in that,
the expression "the target indication value has a corresponding relationship with the reference start index value, wherein the corresponding relationship between the target indication value and the reference start index value is related to the first difference value" comprises:
the target indication value is equal to the first intermediate value plus the product of the first reference numerical value and the second intermediate value minus the first reference numerical value; the first intermediate value is equal to the ratio of the reference start index value to the first difference value, the second intermediate value is a positive integer not greater than the first reference numerical value minus the first intermediate value; the first reference numerical value is equal to one of the size of the initial BWP and the size of CORESET 0.

According to one aspect of the present application, the methods described above are characterized in that,
the expression "the target indication value has a corresponding relationship with the reference start index value, wherein the corresponding relationship between the target indication value and the reference start index value is related to the first difference value" comprises:
the target indication value is equal to a third target numerical value minus the first intermediate value minus the product of the first reference numerical value and the second intermediate value; the first intermediate value is equal to the ratio of the reference start index value to the first difference value, the second intermediate value is a positive integer not greater than the first reference numerical value minus the first intermediate value; the first reference value is equal to one of the size of the initial BWP and the size of CORESET 0; the third target numerical value is related to the first reference numerical value.

According to one aspect of the present application, the methods described above are characterized in that,
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is equal to the ratio of the reference length value to the second difference value, wherein the second difference value is a positive integer; the first target indication value is equal to 1 or -1, the second target numerical value is equal to a first reference numerical value or the product of the first reference numerical value and -1, the first reference numerical value is equal to one of the size of the initial BWP and the size of CORESET 0, and the third target numerical value is related to the first reference numerical value.

According to one aspect of the present application, the methods described above are characterized in that,
the first signaling comprises a first field, wherein the first field in the first signaling is used to determine the target indication value; the first field in the first signaling in the range of values for an RIV is a first indication-value set, the first indication-value set comprises a plurality of indication values, and each indication value in the first indication-value set corresponds to a first type start index value and a first type length value; for any indication value in the first indication-value set: the corresponding first type start index value is equal to one numerical value in the first numerical-value set and the corresponding first type length value is equal to one numerical value in the second numerical-value set.

According to one aspect of the present application, the methods described above are characterized in that,
the target indication value is any indication value in the first indication-value set; the reference start index value is the first type start index value corresponding to the target indication value, and the reference length value is the first type length value corresponding to the target indication value.

According to one aspect of the present application, the methods described above are characterized in that,
the difference value between any two adjacent numerical values in the second numerical-value set is equal to a second difference value; the second difference value is not equal to the first difference value, and the second difference value is a positive integer.

According to one aspect of the present application, the methods described above are characterized in that,
the cardinal number of the first numerical-value set is equal to the first reference numerical value, and the cardinal number of the second numerical-value set is not greater than the cardinal number of the first numerical-value set.

According to one aspect of the present application, the methods described above are characterized in that,
the first difference value is greater than the second difference value.

According to one aspect of the present application, the methods described above are characterized in that,
the first difference value is related to the size of an activated BWP.

According to one aspect of the present application, the methods described above are characterized in that,
the second difference value is equal to 1 or is related to the capabilities of the first node.

According to one aspect of the present application, the methods described above are characterized in that,
the reference start index value is equal to a non-negative integer multiple of the first difference value.

According to one aspect of the present application, the methods described above are characterized in that,
the reference length value and the first difference value are coprime.

Disclosed in the present application is a method used in a second wireless communication node, characterized in that, the method comprises:
sending first signaling, wherein the first signaling is used for determining a target indication value, and the target indication value is a non-negative integer;
wherein the first difference value is related to the size of a BWP, and the first difference value is a positive integer greater than 1; the reference start index value is the index of a starting resource block, the target indication value has a corresponding relationship with the reference start index value, wherein the corresponding relationship between the target indication value and the reference start index value is related to the first difference value; the reference length value is the number of assigned resource blocks, the target indication value corresponds to the reference length value, and the remainder obtained by dividing one numerical value in the range of values for the reference length value by the first difference value is greater than zero.

According to one aspect of the present application, the methods described above are characterized in that,
the numerical values in the range of values for the reference start index value are all non-negative integer multiples of the first difference value.

According to one aspect of the present application, the methods described above are characterized in that,
sending a first signal, or receiving the first signal;
wherein the reference start index value is the index of a starting resource block occupied by the first signal and the reference length value is the number of resource blocks assigned to the first signal.

According to one aspect of the present application, the methods described above are characterized in that,
the reference start index value is equal to a non-negative integer multiple of the first difference value.

According to one aspect of the present application, the methods described above are characterized in that,
the target indication value corresponds to the reference start index value and the reference length value.

According to one aspect of the present application, the methods described above are characterized in that,
the reference length value depends on the target indication value.

According to one aspect of the present application, the methods described above are characterized in that,
the expression "the target indication value has a corresponding relationship with the reference start index value, wherein the corresponding relationship between the target indication value and the reference start index value is related to the first difference value" comprises:
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is a positive integer not greater than the first reference numerical value minus the first intermediate value; the first target indication value is equal to 1 or -1, the second target numerical value is equal to the first reference numerical value or the product of the first reference numerical value and -1, the first reference numerical value is equal to one of the size of the initial BWP and the size of CORESET 0, and the third target numerical value is related to the first reference numerical value.

According to one aspect of the present application, the methods described above are characterized in that,
the expression "the target indication value has a corresponding relationship with the reference start index value, wherein the corresponding relationship between the target indication value and the reference start index value is related to the first difference value" comprises:
the target indication value is equal to the first intermediate value plus the product of the first reference numerical value and the second intermediate value minus the first reference numerical value; the first intermediate value is equal to the ratio of the reference start index value to the first difference value, the second intermediate value is a positive integer not greater than the first reference numerical value minus the first intermediate value; the first reference numerical value is equal to one of the size of the initial BWP and the size of CORESET 0.

According to one aspect of the present application, the methods described above are characterized in that,
the expression "the target indication value has a corresponding relationship with the reference start index value, wherein the corresponding relationship between the target indication value and the reference start index value is related to the first difference value" comprises:
the target indication value is equal to a third target numerical value minus the first intermediate value minus the product of the first reference numerical value and the second intermediate value; the first intermediate value is equal to the ratio of the reference start index value to the first difference value, the second intermediate value is a positive integer not greater than the first reference numerical value minus the first intermediate value; the first reference value is equal to one of the size of the initial BWP and the size of CORESET 0; the third target numerical value is related to the first reference numerical value.

According to one aspect of the present application, the methods described above are characterized in that,
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is equal to the ratio of the reference length value to the second difference value, wherein the second difference value is a positive integer; the first target indication value is equal to 1 or -1, the second target numerical value is equal to a first reference numerical value or the product of the first reference numerical value and -1, the first reference numerical value is equal to one of the size of the initial BWP and the size of CORESET 0, and the third target numerical value is related to the first reference numerical value.

According to one aspect of the present application, the methods described above are characterized in that,
the first signaling comprises a first field, wherein the first field in the first signaling is used to determine the target indication value; the first field in the first signaling in the range of values for an RIV is a first indication-value set, the first indication-value set comprises a plurality of indication values, and each indication value in the first indication-value set corresponds to a first type start index value and a first type length value; for any indication value in the first indication-value set: the corresponding first type start index value is equal to one numerical value in the first numerical-value set and the corresponding first type length value is equal to one numerical value in the second numerical-value set.

According to one aspect of the present application, the methods described above are characterized in that,
the target indication value is any indication value in the first indication-value set; the reference start index value is the first type start index value corresponding to the target indication value, and the reference length value is the first type length value corresponding to the target indication value.

According to one aspect of the present application, the methods described above are characterized in that,
the difference value between any two adjacent numerical values in the second numerical-value set is equal to a second difference value; the second difference value is not equal to the first difference value, and the second difference value is a positive integer.

According to one aspect of the present application, the methods described above are characterized in that,
the cardinal number of the first numerical-value set is equal to the first reference numerical value, and the cardinal number of the second numerical-value set is not greater than the cardinal number of the first numerical-value set.

According to one aspect of the present application, the methods described above are characterized in that,
the first difference value is greater than the second difference value.

According to one aspect of the present application, the methods described above are characterized in that,
the first difference value is related to the size of an activated BWP.

According to one aspect of the present application, the methods described above are characterized in that,
the second difference value is equal to 1 or is related to the capabilities of the receiver of the first signaling.

According to one aspect of the present application, the methods described above are characterized in that,
the reference start index value is equal to a non-negative integer multiple of the first difference value.

According to one aspect of the present application, the methods described above are characterized in that,
the reference length value and the first difference value are coprime.

Disclosed in the present application is a first wireless communication node, characterized in that, the node comprises:
a first receiver receiving first signaling, wherein the first signaling is used to determine a target indication value, and the target indication value is a non-negative integer;
wherein the first difference value is related to the size of a BWP, and the first difference value is a positive integer greater than 1; the reference start index value is the index of a starting resource block, the target indication value has a corresponding relationship with the reference start index value, wherein the corresponding relationship between the target indication value and the reference start index value is related to the first difference value; the reference length value is the number of assigned resource blocks, the target indication value corresponds to the reference length value, and the remainder obtained by dividing one numerical value in the range of values for the reference length value by the first difference value is greater than zero.

According to one aspect of the present application, the first node described above is characterized in that,
the numerical values in the range of values for the reference start index value are all non-negative integer multiples of the first difference value.

According to one aspect of the present application, the first node described above is characterized in that,
a first transceiver receiving a first signal, or sending the first signal;
wherein the reference start index value is the index of a starting resource block occupied by the first signal and the reference length value is the number of resource blocks assigned to the first signal.

According to one aspect of the present application, the first node described above is characterized in that,
the reference start index value is equal to a non-negative integer multiple of the first difference value.

According to one aspect of the present application, the first node described above is characterized in that,
the target indication value corresponds to the reference start index value and the reference length value.

According to one aspect of the present application, the first node described above is characterized in that,
the reference length value depends on the target indication value.

According to one aspect of the present application, the first node described above is characterized in that,
the expression "the target indication value has a corresponding relationship with the reference start index value, wherein the corresponding relationship between the target indication value and the reference start index value is related to the first difference value" comprises:
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is a positive integer not greater than the first reference numerical value minus the first intermediate value; the first target indication value is equal to 1 or -1, the second target numerical value is equal to the first reference numerical value or the product of the first reference numerical value and -1, the first reference numerical value is equal to one of the size of the initial BWP and the size of CORESET 0, and the third target numerical value is related to the first reference numerical value.

According to one aspect of the present application, the first node described above is characterized in that,
the expression "the target indication value has a corresponding relationship with the reference start index value, wherein the corresponding relationship between the target indication value and the reference start index value is related to the first difference value" comprises:
the target indication value is equal to the first intermediate value plus the product of the first reference numerical value and the second intermediate value minus the first reference numerical value; the first intermediate value is equal to the ratio of the reference start index value to the first difference value, the second intermediate value is a positive integer not greater than the first reference numerical value minus the first intermediate value; the first reference numerical value is equal to one of the size of the initial BWP and the size of CORESET 0.

According to one aspect of the present application, the first node described above is characterized in that,
the expression "the target indication value has a corresponding relationship with the reference start index value, wherein the corresponding relationship between the target indication value and the reference start index value is related to the first difference value" comprises:
the target indication value is equal to a third target numerical value minus the first intermediate value minus the product of the first reference numerical value and the second intermediate value; the first intermediate value is equal to the ratio of the reference start index value to the first difference value, the second intermediate value is a positive integer not greater than the first reference numerical value minus the first intermediate value; the first reference value is equal to one of the size of the initial BWP and the size of CORESET 0; the third target numerical value is related to the first reference numerical value.

According to one aspect of the present application, the first node described above is characterized in that,
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is equal to the ratio of the reference length value to the second difference value, wherein the second difference value is a positive integer; the first target indication value is equal to 1 or -1, the second target numerical value is equal to a first reference numerical value or the product of the first reference numerical value and -1, the first reference numerical value is equal to one of the size of the initial BWP and the size of CORESET 0, and the third target numerical value is related to the first reference numerical value.

According to one aspect of the present application, the first node described above is characterized in that,
the first signaling comprises a first field, wherein the first field in the first signaling is used to determine the target indication value; the first field in the first signaling in the range of values for an RIV is a first indication-value set, the first indication-value set comprises a plurality of indication values, and each indication value in the first indication-value set corresponds to a first type start index value and a first type length value; for any indication value in the first indication-value set: the corresponding first type start index value is equal to one numerical value in the first numerical-value set and the corresponding first type length value is equal to one numerical value in the second numerical-value set.

According to one aspect of the present application, the first node described above is characterized in that,
the target indication value is any indication value in the first indication-value set; the reference start index value is the first type start index value corresponding to the target indication value, and the reference length value is the first type length value corresponding to the target indication value.

According to one aspect of the present application, the first node described above is characterized in that,
the difference value between any two adjacent numerical values in the second numerical-value set is equal to a second difference value; the second difference value is not equal to the first difference value, and the second difference value is a positive integer.

According to one aspect of the present application, the first node described above is characterized in that,
the cardinal number of the first numerical-value set is equal to the first reference numerical value, and the cardinal number of the second numerical-value set is not greater than the cardinal number of the first numerical-value set.

According to one aspect of the present application, the first node described above is characterized in that,
the first difference value is greater than the second difference value.

According to one aspect of the present application, the first node described above is characterized in that,
the first difference value is related to the size of an activated BWP.

According to one aspect of the present application, the first node described above is characterized in that,
the second difference value is equal to 1 or is related to the capabilities of the first node.

According to one aspect of the present application, the first node described above is characterized in that,
the reference start index value is equal to a non-negative integer multiple of the first difference value.

According to one aspect of the present application, the first node described above is characterized in that,
the reference length value and the first difference value are coprime.

Disclosed in the present application is a second wireless communication node, characterized in that, the node comprises:
a second transmitter sending first signaling, wherein the first signaling is used to determine a target indication value, and the target indication value is a non-negative integer;
wherein the first difference value is related to the size of a BWP, and the first difference value is a positive integer greater than 1; the reference start index value is the index of a starting resource block, the target indication value has a corresponding relationship with the reference start index value, wherein the corresponding relationship between the target indication value and the reference start index value is related to the first difference value; the reference length value is the number of assigned resource blocks, the target indication value corresponds to the reference length value, and the remainder obtained by dividing one numerical value in the range of values for the reference length value by the first difference value is greater than zero.

### Description of Accompanying Drawings

Other features, objectives, and advantages of the present application will become more apparent by reading the detailed description of the non-limiting embodiments with reference to the following accompanying drawings:
FIG. 1 shows a processing flow chart of a first node according to one embodiment of the present application;
FIG. 2 shows a schematic diagram of a network architecture according to one embodiment of the present application;
FIG. 3 shows a schematic diagram of a wireless protocol architecture for a user plane and a control plane, according to one embodiment of the present application;
FIG. 4 shows a schematic diagram of a first communication equipment and a second communication equipment, according to one embodiment of the present application;
FIG. 5 shows a signal transmission flow chart according to one embodiment of the present application;
FIG. 6 shows a schematic diagram of the relationship between a second numerical-value set, a second difference value, and a first difference value, according to one embodiment of the present application;
FIG. 7 shows a schematic diagram of a target indication value according to one embodiment of the present application;
FIG. 8 shows a schematic diagram of a first reference numerical value according to one embodiment of the present application;
FIG. 9 shows a schematic diagram of the relationship between a first numerical-value set and a first reference numerical value, according to one embodiment of the present application;
FIG. 10 shows an illustrative schematic diagram of a first difference value according to one embodiment of the present application;
FIG. 11 shows a schematic diagram of the relationship between a second numerical-value set, a first numerical-value subset, a second difference value, and a first difference value, according to one embodiment of the present application;
FIG. 12 shows an illustrative schematic diagram of a second difference value according to one embodiment of the present application;
FIG. 13 shows a schematic diagram of the relationship between first signaling, a first field, a target indication value, and a first indication-value set, according to one embodiment of the present application;
FIG. 14 shows a processing flow chart of a first node according to one embodiment of the present application;
FIG. 15 shows a schematic diagram of the relationship between a target indication value, a second intermediate value, and a reference length value, according to one embodiment of the present application;
FIG. 16 shows a structural block diagram of a processing apparatus in a first node equipment according to one embodiment of the present application;
FIG. 17 shows a structural block diagram of a processing apparatus in a second node equipment according to one embodiment of the present application.

### Specific Embodiments

The technical solutions of the present application will be described in further detail below in conjunction with the accompanying drawings. It should be noted that the embodiments of the present application and the features in the embodiments may be arbitrarily combined with one another without conflict.

### Embodiment 1

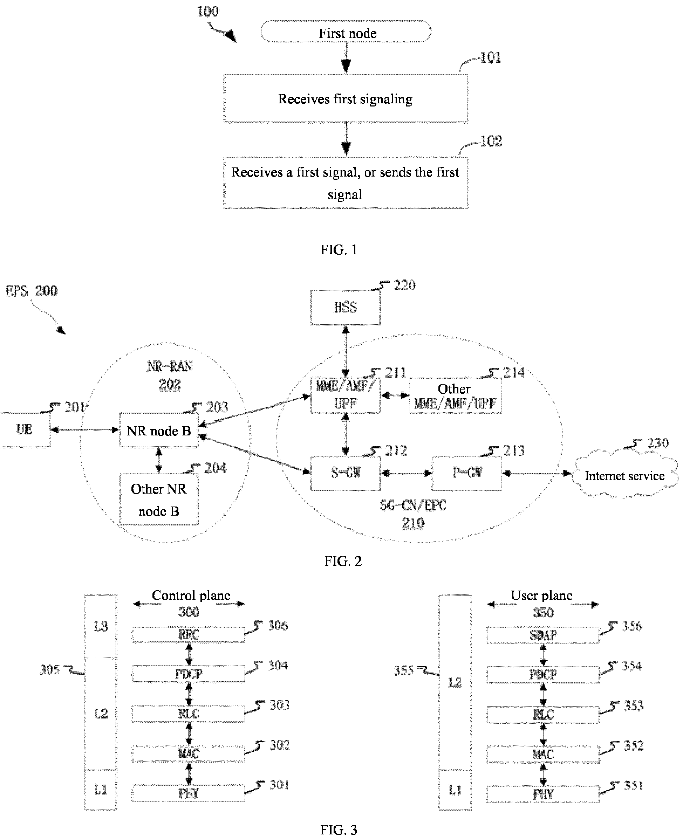

Embodiment 1 exemplifies a processing flow chart of a first node according to one embodiment of the present application, as shown in FIG. 1.

In Embodiment 1, the first node in the present application receives first signaling in Step 101; receives a first signal, or sends the first signal in Step 102.

In Embodiment 1, the first signaling is used to determine a target indication value, and the target indication value is a non-negative integer; a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value and the number of resource blocks occupied by the first signal is related to the reference length value.

As one embodiment, the first signaling is physical layer signaling.

As one embodiment, the first signaling comprises physical layer signaling.

As one embodiment, the first signaling is downlink control signaling.

As one embodiment, the first signaling is in a DCI (downlink control information) format (DCI format).

As one embodiment, the first signaling is a DCI signaling.

As one embodiment, the first signaling is signaling in a DCI format.

As one embodiment, the first node receives the first signaling in a physical layer control channel.

As one embodiment, the first node receives the first signaling in a PDCCH (physical downlink control channel).

As one embodiment, the first signaling is in DCI format 1_0.

As one embodiment, the first signaling is in DCI format 0_0.

As one embodiment, the first signaling is in DCI format 1_0 in a USS (UE-specific search space).

As one sub-embodiment of the embodiment described above, the size of the first signaling is derived based on the size of DCI format 1_0 in a CSS (common search space).

As one embodiment, the first signaling is in a DCI format in a USS, and the size of the first signaling is derived based on the size of the DCI format in a CSS.

As one embodiment, the size of the first signaling is derived based on the initial downlink (DL) BWP or CORESET 0.

As one embodiment, the first signaling is in DCI format 0_0 in a USS.

As one sub-embodiment of the embodiment described above, the size of the first signaling is derived based on the initial uplink (UL) BWP.

As one embodiment, the size of the first signaling is derived based on the initial uplink (UL) BWP.

As one embodiment, the first signaling is in DCI format 4_0.

As one embodiment, the first signaling is in DCI format 4_1.

As one embodiment, the first signaling is in DCI format 1_1.

As one embodiment, the first signaling is in DCI format 1_2.

As one embodiment, the first signaling is in DCI format 0_1.

As one embodiment, the first signaling is in DCI format 0_2.

As one embodiment, the first signaling adopts one of DCI format 0_0, DCI format 0_1, and DCI format 0_2.

As one embodiment, the first signaling adopts a DCI format that is a DCI format other than DCI format 0_0, DCI format 0_1, or DCI format 0_2.

As one embodiment, the first signaling is an uplink grant signaling.

As one embodiment, the first signaling is a downlink grant signaling.

As one embodiment, the first signaling is dynamically configured.

As one embodiment, the first signaling comprises signaling of Layer 1 (L1).

As one embodiment, the first signaling comprises control signaling of Layer 1 (L1).

As one embodiment, the first signaling comprises one or a plurality of fields in a physical layer signaling.

As one embodiment, the first signaling comprises higher layer signaling.

As one embodiment, the first signaling comprises one or a plurality of fields in a higher layer signaling.

As one embodiment, the higher layer comprises at least one of a RRC layer and a MAC layer.

As one embodiment, the first signaling comprises RRC (Radio Resource Control) signaling.

As one embodiment, the first signaling comprises a MAC CE (Medium Access Control Layer Control Element).

As one embodiment, the first signaling comprises one or a plurality of fields in RRC signaling.

As one embodiment, the first signaling comprises one or a plurality of fields in a MAC CE.

As one embodiment, the first signaling comprises one or a plurality of fields in an IE (Information Element).

As one embodiment, the first signaling is used to indicate the target indication value.

As one embodiment, the first signaling is an explicit indication of the target indication value.

As one embodiment, the first signaling is an implicit indication of the target indication value.

As one embodiment, the first signaling is used to configure the target indication value.

As one embodiment, the expression "the first signaling is used to determine a target indication value" comprises: the first signaling comprises the target indication value.

As one embodiment, the first signaling comprises a first field, and the target indication value is a value expressed by a plurality of bits in the first field of the first signaling.

As one embodiment, the first signaling comprises a first field, and the target indication value is a resource indication value (RIV) included in the first field of the first signaling.

As one embodiment, the target indication value is an RIV.

As one embodiment, the target indication value is a value used to indicate frequency domain resource assignment.

As one embodiment, the first signal comprises a wireless signal.

As one embodiment, the first signal comprises a radio frequency signal.

As one embodiment, the first signal comprises a baseband signal.

As one embodiment, the first signal comprises a signal transferred over a physical channel.

As one embodiment, the first signal comprises a signal transferred over a physical layer shared channel.

As one embodiment, the first signal comprises a signal transferred over a PDSCH (physical downlink shared channel).

As one embodiment, the first signal comprises a signal transferred over a PUSCH (physical uplink shared channel).

As one embodiment, the expression "receiving a first signal" comprises: receiving a PDSCH.

As one embodiment, the expression "receiving a first signal" comprises: the first signal is a PDSCH, and this PDSCH receives at least one bit block.

As one embodiment, the expression "receiving a first signal" comprises: the first signal comprises a PDSCH, and this PDSCH receives at least one bit block.

As one embodiment, the expression "receiving a first signal" comprises: the first signal belongs to a PDSCH, and this PDSCH receives at least one bit block.

As one embodiment, the expression "sending a first signal" comprises: sending a PUSCH.

As one embodiment, the expression "sending a first signal" comprises: the first signal is a PUSCH, and this PUSCH sends at least one bit block.

As one embodiment, the expression "sending a first signal" comprises: the first signal comprises a PUSCH, and this PUSCH sends at least one bit block.

As one embodiment, the expression "sending a first signal" comprises: the first signal belongs to a PUSCH, and this PUSCH sends at least one bit block.

As one embodiment, in the present application, one bit block comprises a transport block (TB).

As one embodiment, in the present application, one bit block comprises at least one of a transport block and a bit used for a CSI (channel state information) report.

As one embodiment, in the present application, one bit block is sent on at least one PUSCH or one PDSCH after being encoded by at least one channel.

As one embodiment, no two numerical values in the first numerical-value set are identical.

As one embodiment, the plurality of numerical values included in the first numerical-value set constitutes an arithmetic progression.

As one embodiment, "two adjacent numerical values in the first numerical-value set" includes the following meaning: the first numerical-value set does not contain any numerical value that is greater than whichever is smaller of two adjacent numerical values and any numerical value that is smaller than whichever is greater of these two adjacent numerical values.

As one embodiment, a first given numerical value is any numerical value in the first numerical-value set; when the first given numerical value is the smallest numerical value in the first numerical-value set, one numerical value adjacent to the first given numerical value is the smallest numerical value greater than the first given numerical value in the first numerical-value set; when the first given numerical value is the greatest numerical value in the first numerical-value set, one numerical value adjacent to the first given numerical value is smaller than the greatest numerical value of the first given numerical value in the first numerical-value set; when the first given numerical value is a numerical value other than the smallest numerical value and the greatest numerical value in the first numerical-value set, two numerical values adjacent to the first given numerical value are the smallest numerical value greater than the first given numerical value in the first numerical-value set and the greatest numerical value smaller than the first given numerical value in the first numerical-value set, respectively.

As one embodiment, the difference value between two adjacent numerical values in the first numerical-value set refers to: the difference value between the larger of these two adjacent numerical values minus the smaller of these two adjacent numerical values.

As one embodiment, the numerical values in the first numerical-value set are all non-negative integers.

As one embodiment, the smallest value in the first numerical-value set is equal to 0.

As one embodiment, the smallest value in the first numerical-value set is greater than 0.

As one embodiment, every numerical value in the first numerical-value set is equal to a non-negative integer multiple of the first difference value.

As one embodiment, the non-negative integer multiple of a numerical value is 0 or a positive integer multiple of this numerical value.

As one embodiment, the cardinal number of the first numerical-value set is equal to the cardinal number of the second numerical-value set.

As one embodiment, the cardinal number of the first numerical-value set is not smaller than the cardinal number of the second numerical-value set.

As one embodiment, the cardinal number of the first numerical-value set is smaller than the cardinal number of the second numerical-value set.

As one embodiment, the difference value between any two adjacent numerical values in the second numerical-value set is equal to a second difference value; the second difference value is not equal to the first difference value, and the second difference value is a positive integer.

As one embodiment, the second difference value is equal to 1 and the first difference value is greater than 1.

As one embodiment, the first difference value is greater than the second difference value.

As one embodiment, the first difference value is smaller than the second difference value.

As one embodiment, the first difference value and the second difference value are coprime.

As one embodiment, the first difference value is configurable.

As one embodiment, the first difference value is not greater than 8.

As one embodiment, the first difference value is not greater than 1,024.

As one embodiment, the second numerical-value set is related to UE capabilities.

As one embodiment, the greatest numerical value in the second numerical-value set is a constant.

As one embodiment, the greatest numerical value in the second numerical-value set is not greater than 25.

As one embodiment, the greatest numerical value in the second numerical-value set is not greater than 275.

As one embodiment, the second numerical-value set is configurable.

As one embodiment, the second numerical-value set is related to at least one of the size of a BWP and the size of a CORESET.

As one embodiment, the second numerical-value set depends on at least one of the size of a BWP and the size of a CORESET.

As one embodiment, the second numerical-value set is related to at least CORESET 0.

As one embodiment, the second numerical-value set depends on CORESET 0.

As one embodiment, the second numerical-value set depends on the configuration of CORESET 0.

As one embodiment, the second numerical-value set depends on the size of the initial downlink BWP.

As one embodiment, the second numerical-value set depends on the size of the initial uplink BWP.

As one embodiment, the smallest value in the second numerical-value set is greater than the smallest value in the first numerical-value set.

As one embodiment, the greatest value in the second numerical-value set is not greater than the greatest value in the first numerical-value set.

As one embodiment, the smallest value in the second numerical-value set is equal to 1.

As one embodiment, the smallest value in the second numerical-value set is equal to 2.

As one embodiment, the smallest value in the second numerical-value set is equal to 3.

As one embodiment, the smallest value in the second numerical-value set is equal to 4.

As one embodiment, the smallest value in the second numerical-value set is equal to 5.

As one embodiment, the smallest value in the second numerical-value set is equal to 6.

As one embodiment, the smallest value in the second numerical-value set is equal to 7.

As one embodiment, the smallest value in the second numerical-value set is equal to 8.

As one embodiment, the smallest value in the second numerical-value set is smaller than the greatest value in the first numerical-value set.

As one embodiment, the greatest value in the second numerical-value set is not greater than the product of the first reference numerical value and the first difference value.

As one embodiment, the greatest value in the second numerical-value set is not greater than the product of the first reference numerical value and the second difference value.

As one embodiment, the greatest value in the second numerical-value set is not greater than the first threshold.

As one embodiment, the second numerical-value set is related to at least one of the size of a BWP and the size of a CORESET.

As one embodiment, the second numerical-value set depends on the first reference numerical value.

As one embodiment, the reference start index value is related to both the first difference value and the target indication value.

As one embodiment, the reference length value is related to both the second difference value and the target indication value.

As one embodiment, the reference start index value is associated with the target indication value by at least the first difference value.

As one embodiment, the reference length value is associated with the target indication value by at least the second difference value.

As one embodiment, the target indication value is an indication of the reference start index value.

As one embodiment, the target indication value is an indication of the reference length value.

As one embodiment, for the first node, the determination of both the reference start index value and the reference length value depends on the target indication value.

As one embodiment, for the first node, the determination of the reference start index value depends on the first difference value and the target indication value.

As one embodiment, for the first node, the determination of the reference length value depends on the second difference value and the target indication value.

As one embodiment, the expression "the first numerical-value set is related to at least one of the size of a BWP and the size of a CORESET" comprises: the cardinal number of the first numerical-value set is related to at least one of the size of the BWP and the size of the CORESET.

As one embodiment, the expression "the first numerical-value set is related to at least one of the size of a BWP and the size of a CORESET" comprises: the cardinal number of the first numerical-value set is equal to a first reference numerical value, wherein the first reference numerical value is equal to one of the size of the initial BWP and the size of CORESET 0.

As one embodiment, the expression "the first numerical-value set is related to at least one of the size of a BWP and the size of a CORESET" comprises: the greatest numerical value in the first numerical-value set depends on at least one of the size of the BWP and the size of the CORESET.

As one embodiment, the expression "the first numerical-value set is related to at least one of the size of a BWP and the size of a CORESET" comprises: the greatest numerical value in the first numerical-value set is equal to a positive integer multiple of the difference value of the first reference numerical value minus 1, wherein the first reference numerical value is equal to one of the size of the initial BWP and the size of CORESET 0.

As one embodiment, the greatest numerical value in the first numerical-value set is equal to the product of the difference value between the first reference numerical value minus 1 and the first difference value.

As one embodiment, the first numerical-value set depends on at least one of the size of a BWP and the size of a CORESET.

As one embodiment, the first numerical-value set is related to at least CORESET 0.

As one embodiment, the first numerical-value set depends on CORESET 0.

As one embodiment, the first numerical-value set depends on whether CORESET 0 is configured.

As one embodiment, the CORESET 0 is default.

As one embodiment, the CORESET 0 is configurable.

As one embodiment, the CORESET 0 is used to receive control signaling.

As one embodiment, the CORESET 0 is a CORESET with index 0.

As one embodiment, the first numerical-value set depends on the size of the initial downlink BWP.

As one embodiment, the first numerical-value set depends on the size of the initial uplink BWP.

As one embodiment, the first numerical-value set is configurable.

As one embodiment, the cardinal number of the first numerical-value set is equal to a first reference numerical value, wherein the first reference numerical value depends on whether CORESET 0 is configured.

As one embodiment, the greatest numerical value in the first numerical-value set is equal to a positive integer multiple of the difference value of the first reference numerical value minus 1, wherein the first reference numerical value depends on whether CORESET 0 is configured.

As one embodiment, the cardinal number of the first numerical-value set is equal to a first reference numerical value, wherein the first reference numerical value depends on the size of the initial uplink BWP.

As one embodiment, the greatest numerical value in the first numerical-value set is equal to a positive integer multiple of the difference value of the first reference numerical value minus 1, wherein the first reference numerical value depends on the size of the initial uplink BWP.

As one embodiment, if CORESET 0 is configured, the first reference numerical value is equal to the size of CORESET 0; if CORESET 0 is not configured, the first reference numerical value is equal to the size of the initial downlink BWP (initial DL bandwidth part).

As one embodiment, the first reference numerical value is equal to the size of CORESET 0.

As one embodiment, the first reference numerical value is equal to the size of the initial downlink BWP (initial DL bandwidth part).

As one embodiment, the first reference numerical value is equal to the size of the initial uplink BWP (initial UL bandwidth part).

As one embodiment, the size of a BWP (bandwidth part) refers to the number of frequency domain resources included in this BWP.

As one embodiment, the size of a CORESET (control resource set) refers to the number of frequency domain resources included in this CORESET.

As one embodiment, the size of a BWP is equal to the number of RBs (resource blocks) included in this BWP.

As one embodiment, the size of a BWP is equal to the number of PRBs (physical resource blocks) included in this BWP.

As one embodiment, the size of a BWP is equal to the number of virtual resource blocks included in this BWP.

As one embodiment, the size of a CORESET is equal to the number of PRBs included in this CORESET on the frequency domain.

As one embodiment, the expression "the target indication value corresponds to a reference start index value and a reference length value" comprises: the target indication value is associated with the reference start index value and the reference length value.

As one embodiment, the expression "the target indication value corresponds to a reference start index value and a reference length value" comprises: the reference start index value and the reference length value are associated with the target indication value.

As one embodiment, the expression "the target indication value corresponds to a reference start index value and a reference length value" comprises: the target indication value is interrelated with both the reference start index value and the reference length value.

As one embodiment, the expression "the target indication value corresponds to a reference start index value and a reference length value" comprises: based on the predefined mapping rules, the target indication value indicates mapping to the reference start index value and the reference length value.

As one embodiment, the expression "the target indication value corresponds to a reference start index value and a reference length value" comprises: based on the predefined mapping rules, the reference start index value and the reference length value are mapped to the target indication value.

As one embodiment, the expression "the target indication value corresponds to a reference start index value and a reference length value" comprises: for the first node, the target indication value indicates the reference start index value and the reference length value.

As one embodiment, the target indication value is an implicit indication of the reference start index value and the reference length value.

As one embodiment, the target indication value is an explicit indication of the reference start index value and the reference length value.

As one embodiment, the expression "the target indication value corresponds to a reference start index value and a reference length value" comprises: the target indication value is used to obtain the reference start index value and the reference length value.

As one embodiment, the expression "the target indication value corresponds to a reference start index value and a reference length value" comprises: for the first node, the determination of the reference start index value and the reference length value depends on the target indication value.

As one embodiment, the expression "the target indication value corresponds to a reference start index value and a reference length value" comprises:
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is equal to the ratio of the reference length value to the second difference value; the first target indication value is equal to one of 1 and -1, the second target numerical value is equal to one of a first reference numerical value and the product of the first reference numerical value and -1, the first reference numerical value is equal to one of the size of the initial BWP and the size of CORESET 0, and the third target numerical value is related to the first reference numerical value.

As one embodiment, the first target numerical value is equal to 1 and the second target numerical value is equal to the first reference numerical value.

As one embodiment, the first target numerical value is equal to -1 and the second target numerical value is equal to the product of the first reference numerical value and -1.

As one embodiment, the expression "the target indication value corresponds to a reference start index value and a reference length value" comprises:
the difference value of a second intermediate value minus 1 is not greater than the ratio of a first reference numerical value to 2, with the result rounded down to the nearest integer; the target indication value is equal to the first intermediate value plus the product of the first reference numerical value and the second intermediate value minus the first reference numerical value; the first intermediate value is equal to the ratio of the reference start index value to the first difference value, the second intermediate value is equal to the ratio of the reference length value to the second difference value; the first reference numerical value is equal to one of the size of the initial BWP and the size of CORESET 0.

As one embodiment, the expression "the target indication value corresponds to a reference start index value and a reference length value" comprises:
the target indication value is equal to the first intermediate value plus the product of the first reference numerical value and the second intermediate value minus the first reference numerical value; the first intermediate value is equal to the ratio of the reference start index value to the first difference value, the second intermediate value is equal to the ratio of the reference length value to the second difference value; the first reference numerical value is equal to one of the size of the initial BWP and the size of CORESET 0.

As one embodiment, the expression "the target indication value corresponds to a reference start index value and a reference length value" comprises:
the difference value of a second intermediate value minus 1 is greater than the ratio of a first reference numerical value to 2, with the result rounded down to the nearest integer; the target indication value is equal to a third target numerical value minus the first intermediate value minus the product of the first reference numerical value and the second intermediate value; the first intermediate value is equal to the ratio of the reference start index value to the first difference value, the second intermediate value is equal to the ratio of the reference length value to the second difference value; the first reference value is equal to one of the size of the initial BWP and the size of CORESET 0; the third objective numerical value is related to the first reference numerical value.

As one embodiment, the expression "the target indication value corresponds to a reference start index value and a reference length value" comprises:
the target indication value is equal to a third target numerical value minus the first intermediate value minus the product of the first reference numerical value and the second intermediate value; the first intermediate value is equal to the ratio of the reference start index value to the first difference value, the second intermediate value is equal to the ratio of the reference length value to the second difference value; the first reference value is equal to one of the size of the initial BWP and the size of CORESET 0; the third target numerical value is related to the first reference numerical value.

As one embodiment, the reference length value and the first difference value are coprime.

As one embodiment, the result of the reference length value modulo the first difference value is greater than zero.

As one embodiment, the reference length value is not divisible by the first difference value.

As one embodiment, the reference length value and the reference start index value are coprime.

As one embodiment, the second difference value and the first difference value are coprime.

As one embodiment, the reference start index value and the second difference value are coprime.

As one embodiment, the result of the reference start index value modulo the second difference value is greater than zero.

As one embodiment, the reference start index value is not divisible by the second difference value.

As one embodiment, the expression "the starting resource block occupied by the first signal is related to the reference start index value" comprises: the reference start index value and the starting resource block occupied by the first signal are interrelated.

As one embodiment, the expression "the number of resource blocks occupied by the first signal is related to the reference length value" comprises: the reference length value and the number of resource blocks occupied by the first signal are interrelated.

As one embodiment, the starting resource block occupied by the first signal depends on the reference start index value.

As one embodiment, the reference start index value is used to determine the starting resource block occupied by the first signal.

As one embodiment, the reference start index value is used to indicate the starting resource block occupied by the first signal.

As one embodiment, the reference start index value depends on the starting resource block occupied by the first signal.

As one embodiment, the starting resource block occupied by the first signal is used to determine the reference start index value.

As one embodiment, the starting resource block occupied by the first signal is used to indicate the reference start index value.

As one embodiment, the number of the resource blocks occupied by the first signal depends on the reference length value.

As one embodiment, the reference length value is used to determine the number of the resource blocks occupied by the first signal.

As one embodiment, the reference length value is used to indicate the number of the resource blocks occupied by the first signal.

As one embodiment, the reference length value depends on the number of the resource blocks occupied by the first signal.

As one embodiment, the number of the resource blocks occupied by the first signal is used to determine the reference length value.

As one embodiment, the number of the resource blocks occupied by the first signal is used to indicate the reference length value.

As one embodiment, the starting resource block occupied by the first signal is a virtual resource block.

As one embodiment, the starting resource block occupied by the first signal is a physical resource block.

As one embodiment, the resource blocks occupied by the first signal are all virtual resource blocks.

As one embodiment, the resource blocks occupied by the first signal are all physical resource blocks.

As one embodiment, the resource blocks occupied by the first signal are continuous over the frequency domain.

As one embodiment, the index of the starting resource block occupied by the first signal is equal to the reference start index value.

As one embodiment, the number of the resource blocks occupied by the first signal is equal to the reference length value.

As one embodiment, the number of the resource blocks occupied by the first signal is not greater than the reference length value.

As one embodiment, the number of the resource blocks occupied by the first signal refers to: the number of continuous resource blocks assigned to the first signal.

As one embodiment, the number of the resource blocks occupied by the first signal refers to: the number of virtual resource blocks that are continuously assigned to the first signal.

As one embodiment, the number of the resource blocks occupied by the first signal refers to: the number of virtual resource blocks assigned to the first signal.

As one embodiment, the number of the resource blocks occupied by the first signal refers to: the number of physical resource blocks that are continuously assigned to the first signal.

As one embodiment, the reference start index value is the index of the starting resource block occupied by the first signal, and the reference length value is the number of resource blocks occupied by the first signal.

As one embodiment, the index of a resource block comprises the number of this resource block.

As one embodiment, the index of a resource block is defined for a BWP.

As one embodiment, the index of a resource block is ordered within a BWP.

As one embodiment, the expression "at least one numerical value in the second numerical-value set is not a multiple of the first difference value" comprises: the difference value between any two adjacent numerical values in the second numerical-value set is equal to a second difference value, and the second difference value is not equal to the first difference value, and the second difference value is a positive integer.

As one embodiment, the expression "multiples" in the present application refers to: positive integer multiples.

As one embodiment, the reference start index value is equal to 0.

As one embodiment, the reference start index value is a positive integer multiple of the first difference value.

As one embodiment, the reference length value and the first difference value satisfy the following relationship: the remainder obtained by dividing the reference length value by the first difference value is greater than zero.

### Embodiment 2

Embodiment 2 exemplifies a schematic diagram of a network architecture according to the present application, as shown in FIG. 2.

FIG. 2 illustrates a diagram of a network architecture 200 of 5G NR, LTE (Long-Term Evolution) and LTE-A (Long-Term Evolution Advanced) systems. The 5G NR or LTE network architecture 200 may be referred to as an EPS (Evolved Packet System) 200 or some other suitable term. The EPS 200 may comprise one or more of UE (User Equipment) 201, NG-RAN (Next Generation Wireless Access Network) 202, EPC (Evolved Packet Core)/5G-CN (5G-Core Network) 210, HSS (Home Subscriber Server) 220, and Internet service 230. The EPS may be interconnected with other access networks, but these entities/interfaces are not shown for simplicity. As shown in the figure, the EPS provides packet switching services. However, it is readily understood by those skilled in the art that various concepts presented throughout the present application may be extended to a network or other cellular networks that provide circuit switching services. The NG-RAN comprises an NR node B (gNB)203 and another gNB 204. The gNB 203 provides user and control plane protocol termination towards the UE 201. The gNB 203 may be connected to another gNB 204 via an Xn interface (e.g., backhaul). The gNB 203 may also be referred to as a base station, a base transceiver station, a radio base station, a radio transceiver, a transceiver function, a basic service set (BSS), an extended service set (ESS), a TRP (transmit and receive point), or some other suitable term. The gNB 203 provides an access point to the EPC/5G-CN 210 for the UE 201. Examples of the UE 201 include cellular phones, smart phones, session initiation protocol (SIP) phones, laptop computers, personal digital assistants (PDA), satellite radios, non-terrestrial base station communications, satellite mobile communications, global positioning systems, multimedia devices, video devices, digital audio players (e.g., MP3 players), cameras, game consoles, unmanned aerial vehicles, aircraft, narrowband Internet of Things devices, machine-type communications devices, land vehicles, automobiles, wearable devices, or any other similar functional devices. Those skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handheld device, a user agent, a mobile client, a client, or some other suitable term. The gNB 203 is connected to the EPC/5G-CN 210 via an S1/NG interface. The EPC/5G-CN 210 comprises a MME (Mobility Management Entity)/AMF (Authentication Management Field), a UPF (User Plane Function) 211, other MME/AMF/UPF 214, a S-GW (Service Gateway) 212, and a P-GW (Packet Date Network Gateway) 213. The MME/AMF/UPF 211 is a control node that processes signaling between the UE 201 and the EPC/5G-CN 210. In general, the MME/AMF/UPF 211 provides bearer and connection management. All user IPs (Internet Protocal [sic: Protocol]) packets are sent via the S-GW 212, and the S-GW 212 is itself connected to the P-GW 213. The P-GW 213 provides UE IP address assignment as well as other functions. The P-GW 213 is connected to the Internet service 230. The Internet service 230 comprises the operator's corresponding Internet protocol service, which may specifically comprise the Internet, an intranet, an IMS (IP Multimedia Subsystem), and a packet-switched streaming service.

As one embodiment, the UE 201 corresponds to the first node in the present application.

As one embodiment, the UE 201 corresponds to the second node in the present application.

As one embodiment, the UE 201 is a UE.

As one embodiment, the UE 201 is a RedCap UE.

As one embodiment, the UE 201 is a conventional UE.

As one embodiment, the UE 201 is a UE with high processing capabilities.

As one embodiment, the gNB 203 corresponds to the first node in the present application.

As one embodiment, the gNB 203 corresponds to the second node in the present application.

As one embodiment, the UE 201 corresponds to the first node in the present application and the gNB 203 corresponds to the second node in the present application.

As one embodiment, the gNB 203 is a MarcoCellular [sic: macrocell] base station.

As one embodiment, the gNB 203 is a microcell base station.

As one embodiment, the gNB 203 is a picocell base station.

As one embodiment, the gNB 203 is a femtocell base station.

As one embodiment, the gNB 203 is a base station equipment that supports large latency differences.

As one embodiment, the gNB 203 is an aerial platform equipment.

As one embodiment, the gNB 203 is a satellite equipment.

As one embodiment, both the first node and the second node in the present application correspond to the UE 201, for example, V2X communication is performed between the first node and the second node.

### Embodiment 3

Embodiment 3 shows a schematic diagram of a wireless protocol architecture for a user plane and a control plane, according to the present application, as shown in FIG. 3. FIG. 3 is a schematic diagram illustrating an embodiment of a radio protocol architecture for a user plane 350 and a control plane 300, FIG. 3 shows, with three layers, a radio protocol architecture of a control plane 300 for a first communication node equipment (RSU in UE, gNB or V2X) and a second communication node equipment (RSU in gNB, UE or V2X), or between the two UEs: Layer 1, Layer 2 and Layer 3. Layer 1 (L1) is the lowest layer and implements various PHY (physical layer) signal processing functions. L1 will be referred to herein as PHY 301. Layer 2 (L2) 305 is above PHY 301 and is responsible for the link between the first communication node equipment and the second communication node equipment, as well as the two UEs through PHY 301. L2 305 comprises a MAC (Medium Access Control) sublayer 302, an RLC (Radio Link Control) sublayer 303, and a PDCP (Packet Data Convergence Protocol) sublayer 304, and these sublayers terminate at the second communication node equipment. The PDCP sublayer 304 provides multiplexing between different radio bearers and logical channels. The PDCP sublayer 304 also provides security by encrypting data packets and provides inter-zone movement support between the second communication node equipment and the first communication node equipment. The RLC sublayer 303 provides segmentation and reassembly of upper layer data packets, re-transmission of lost data packets, and re-ordering of data packets to compensate for out-of-sequence reception due to HARQ. The MAC sublayer 302 provides multiplexing between logical and transmission channels. The MAC sublayer 302 is also responsible for distributing various radio resources (e.g., resource blocks) in one cell between first communication node equipment. The MAC sublayer 302 is also responsible for HARQ operations. The RRC (Radio Resource Control, Radio Resource Control) sublayer 306 in Layer 3 (L3) in the control plane 300 is responsible for obtaining radio resources (i.e., radio bearers) and configuring the lower layers using RRC signaling between the second communication node equipment and the first communication node equipment. The radio protocol architecture of the user plane 350 comprises Layer 1 (L1) and Layer 2 (L2), the radio protocol architecture of the user plane 350 for the first communication node equipment and the second communication node equipment is generally identical to the corresponding layer and sublayer in the control plane 300 in terms of a physical layer 351, a PDCP sublayer 354 in L2 355, a RLC sublayer 353 in L2 355, and a MAC sublayer 352 in L2 355, but the PDCP sublayer 354 also provides header compression for upper layer data packets to reduce radio transmission overhead. L2 355 in the user plane 350 also comprises a SDAP (Service Data Adaption Protocol), sublayer 356, and the SDAP sublayer 356 is responsible for mapping between a QoS stream and a data radio bearer (DRB) to support the diversity of the service. Although not shown in the figure, the first communication node equipment may have several upper layers above L2 355, including a network layer (e.g., an IP layer) that terminates at the P-GW on the network side and an application layer that terminates at the other end of the connection (e.g., a remote UE, a server, and the like).

As one embodiment, the wireless protocol architecture in FIG. 3 applies to the first node in the present application.

As one embodiment, the wireless protocol architecture in FIG. 3 applies to the second node in the present application.

As one embodiment, at least part of the first signaling in the present application is generated in the RRC sublayer 306.

As one embodiment, at least part of the first signaling in the present application is generated in the MAC sublayer 302.

As one embodiment, at least part of the first signaling in the present application is generated in the MAC sublayer 352.

As one embodiment, at least part of the first signaling in the present application is generated in the PHY 301.

As one embodiment, at least part of the first signaling in the present application is generated in the PHY 351.

As one embodiment, the first signal in the present application is generated in the PHY 301.

As one embodiment, the first signal in the present application is generated in the PHY 351.

As one embodiment, at least part of the first information block in the present application is generated in the RRC sublayer 306.

As one embodiment, at least part of the first information block in the present application is generated in the MAC sublayer 302.

As one embodiment, at least part of the first information block in the present application is generated in the MAC sublayer 352.

As one embodiment, at least part of the first information block in the present application is generated in the PHY 301.

As one embodiment, at least part of the first information block in the present application is generated in the PHY 351.

As one embodiment, at least part of the second information block in the present application is generated in the RRC sublayer 306.

As one embodiment, at least part of the second information block in the present application is generated in the MAC sublayer 302.

As one embodiment, at least part of the second information block in the present application is generated in the MAC sublayer 352.

As one embodiment, at least part of the second information block in the present application is generated in the PHY 301.

As one embodiment, at least part of the second information block in the present application is generated in the PHY 351.

As one embodiment, at least part of the target information block in the present application is generated in the RRC sublayer 306.

As one embodiment, at least part of the target information block in the present application is generated in the MAC sublayer 302.

As one embodiment, at least part of the target information block in the present application is generated in the MAC sublayer 352.

As one embodiment, at least part of the target information block in the present application is generated in the PHY 301.

As one embodiment, at least part of the target information block in the present application is generated in the PHY 351.

### Embodiment 4

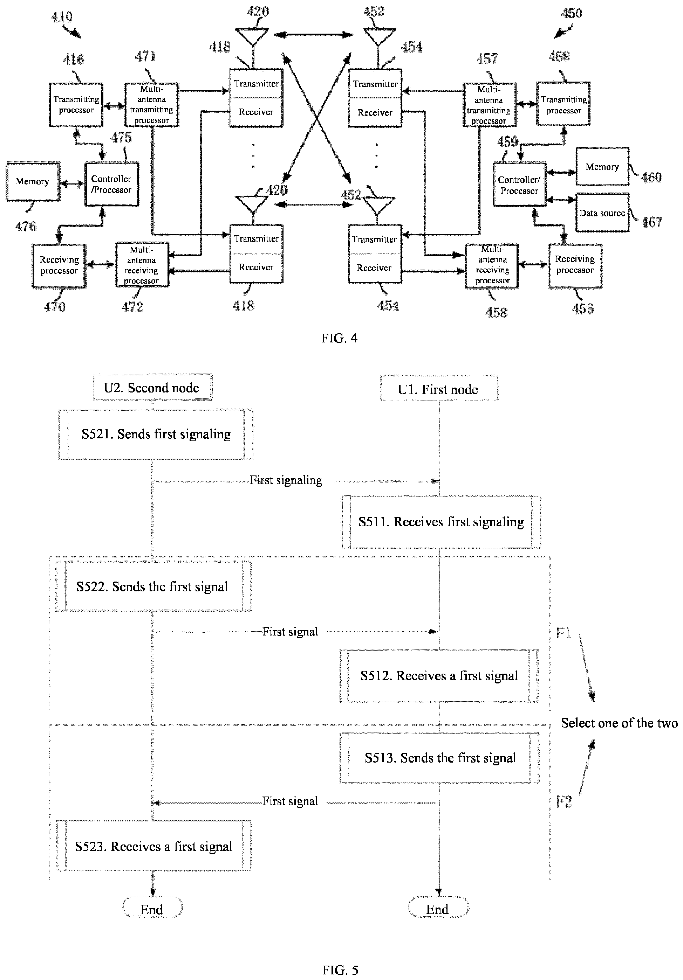

Embodiment 4 shows a schematic diagram of a first communication equipment and a second communication equipment of the present application, as shown in FIG. 4. FIG. 4 is a block diagram of a first communication equipment 410 and a second communication equipment 450 in communication with each other over an access network.

The first communication equipment 410 comprises a controller/processor 475, a memory 476, a receiving processor 470, a transmitting processor 416, a multi-antenna receiving processor 472, a multi-antenna transmitting processor 471, a transmitter/receiver 418, and an antenna 420.

The second communication equipment 450 comprises a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

In the transmission from the first communication equipment 410 to the second communication equipment 450, at the first communication equipment 410, an upper layer data packet from the core network is provided to the controller/processor 475. The controller/processor 475 implements the functionality of L2. In the transmission from the first communication equipment 410 to the first communication equipment 450, the controller/processor 475 provides header compression, encryption, packet segmentation and re-ordering, multiplexing between logical and transport channels, and radio resource assignment to the second communication equipment 450 based on various priority measures. The controller/processor 475 is also responsible for the re-transmission of lost packets and signaling to the second communication equipment 450. The transmitting processor 416 and the multi-antenna transmitting processor 471 implement various signal processing functions for L1 (i.e., the physical layer). The transmitting processor 416 implements coding and interleaving to facilitate forward error correction (FEC) at the second communication equipment 450, and mapping of signal clusters based on various modulation schemes (e.g., binary phase shift keying (BPSK), quadrature phase shift keying (QPSK), M-phase shift keying (M-PSK), M-quadrature amplitude modulation (M-QAM)). The multi-antenna transmitting processor 471 pre-codes coded and modulated symbols in digital space, including codebook-based pre-coding and non-codebook-based pre-coding, and beamforming processing, generating one or a plurality of spatial streams. The transmitting processor 416 then maps each spatial stream to a sub-carrier, multiplexes it with a reference signal (e.g., pilot) in the time domain and/or frequency domain, and then uses an inverse fast Fourier transform (IFFT) to generate a physical channel of the time domain multi-carrier symbol stream on the carrier. The multi-antenna transmitting processor 471 then sends the analog pre-coding/beamforming operation for the time domain multi-carrier symbol stream. Each transmitter 418 converts the baseband multi-carrier symbol stream provided by the multi-antenna transmitting processor 471 into a radio frequency stream, which is then provided to a different antenna 420.

In the transmission from the first communication equipment 410 to the second communication equipment 450, at the second communication equipment 450, each receiver 454 receives a signal through the respective antenna 452 thereof. Each receiver 454 restores information that is modulated onto the radio frequency carrier, converts the radio frequency stream into a baseband multi-carrier symbol stream and provides it to the receiving processor 456. The receiving processor 456 and the multi-antenna receiving processor 458 implement various signal processing functions of L1. The multi-antenna receiving processor 458 receives the analog pre-coding/beamforming operation for the baseband multi-carrier symbol stream from the receiver 454. The receiving processor 456 uses fast Fourier transform (FFT) to convert the baseband multi-carrier symbol stream from the time domain to the frequency domain after receiving the analog pre-coding/beamforming operation. In the frequency domain, the physical layer data signal and the reference signal are demultiplexed by the receiving processor 456, wherein the reference signal is used for channel estimation and the data signal restores any spatial stream destined for the second communication equipment 450 after multi-antenna detection by the multi-antenna receiving processor 458. The symbols on each spatial stream are demodulated and restored in the receiving processor 456 and generate a soft decision. The receiving processor 456 then decodes and de-interleaves the soft decision to restore upper layer data and control signals transmitted by the first communication equipment 410 over the physical channel. The upper layer data and control signals are then provided to the controller/processor 459. The controller/processor 459 implements the functions of L2. The controller/processor 459 may be associated with the memory 460 storing program code and data. The memory 460 may be referred to as a computer-readable medium. In the transmission from the first communication equipment 410 to the second communication equipment 450, the controller/processor 459 provides demultiplexing between transport and logical channels, packet reassembly, decryption, header decompression, and control signal processing to restore the upper layer data packet from the core network. The upper layer data packet is then provided to all protocol layers above L2. Various control signals may also be provided to L3 for L3 processing.

In the transmission from the second communication equipment 450 to the first communication equipment 410, at the second communication equipment 450, the data source 467 is used to provide the upper layer data packet to the controller/processor 459. The data source 467 represents all protocol layers above L2. Similar to the sending function at the first communication equipment 410 described in the transmission from the first communication equipment 410 to the second communication equipment 450, the controller/processor 459 implements header compression, encryption, packet segmentation and re-ordering based on wireless resource assignment, and multiplexing between logical and transport channels, to implement L2 functions for the user plane and control plane. The controller/processor 459 is also responsible for the re-transmission of lost packets, and signaling to the first communication equipment 410. The transmitting processor 468 performs modulation mapping and channel coding processing, the multi-antenna transmitting processor 457 carries out digital multi-antenna spatial pre-coding, including codebook-based precoding and non-codebook-based pre-coding, and beamforming processing, and then the transmitting processor 468 modulates the generated spatial stream to a multi-carrier/single-carrier symbol stream, which is then sent to a different antenna 452 via the transmitter 454 after the analog pre-coding/beamforming operation by the multi-antenna transmitting processor 457. Each transmitter 454 first converts the baseband symbol stream provided by the multi-antenna transmitting processor 457 into a radio frequency symbol stream and then provides it to the antenna 452.

In the transmission from the second communication equipment 450 to the first communication equipment 410, the functions at the first communication equipment 410 are similar to the receiving function at the second communication equipment 450 described in the transmission from the first communication equipment 410 to the second communication equipment 450. Each receiver 418 receives a radio frequency signal through the respective antenna 420, thereof, converts the received radio frequency signal into a baseband signal, and provides the baseband signal to the multi-antenna receiving processor 472 and the receiving processor 470. The receiving processor 470 and the multi-antenna receiving processor 472 collectively implement the functions of L1. The controller/processor 475 implements L2 functions. The controller/processor 475 may be associated with the memory 476 storing program code and data. The memory 476 may be referred to as a computer-readable medium. In the transmission from the second communication equipment 450 to the first communication equipment 410, the controller/processor 475 provides demultiplexing between transport and logical channels, packet reassembly, decryption, header decompression, and control signal processing to restore the upper layer data packet from the UE 450. The upper layer data packet from the controller/processor 475 may be provided to the core network.

As one embodiment, the first node in the present application comprises the second communication equipment 450 and the second node in the present application comprises the first communication equipment 410.

As one sub-embodiment of the embodiment described above, the first node is a user equipment and the second node is a user equipment.

As one sub-embodiment of the embodiment described above, the first node is a user equipment and the second node is a relay node.

As one sub-embodiment of the embodiment described above, the first node is a relay node and the second node is a user equipment.

As one sub-embodiment of the embodiment described above, the first node is a user equipment and the second node is a base station equipment.

As one sub-embodiment of the embodiment described above, the first node is a relay node and the second node is a base station equipment.

As one sub-embodiment of the embodiment described above, the second node is a user equipment and the first node is a base station equipment.

As one sub-embodiment of the embodiment described above, the second node is a relay node and the first node is a base station equipment.

As one sub-embodiment of the embodiment described above, the second communication equipment 450 comprises: at least one controller/processor; the at least one controller/processor is responsible for HARQ operations.

As one sub-embodiment of the embodiment described above, the first communication equipment 410 comprises: at least one controller/processor; the at least one controller/processor is responsible for HARQ operations.

As one sub-embodiment of the embodiment described above, the first communication equipment 410 comprises: at least one controller/processor; the at least one controller/processor is responsible for error detection using an acknowledgment (ACK) and/or a negative acknowledgment (NACK) protocol to support HARQ operations.

As one embodiment, the second communication equipment 450 comprises: at least one processor and at least one memory, wherein the at least one memory comprises a computer program code; the at least one memory and the computer program code is configured to be used with the at least one processor. The second communication equipment 450 apparatus at least: receives first signaling, wherein the first signaling is used to determine a target indication value, and the target indication value is a non-negative integer; receives a first signal, or sends the first signal; wherein, a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value and the number of resource blocks occupied by the first signal is related to the reference length value.

As one sub-embodiment of the embodiment described above, the second communication equipment 450 corresponds to the first node in the present application.

As one embodiment, the second communication equipment 450 comprises: A memory storing a computer readable instruction program that when executed by at least one processor generates an action, and the action comprises: receives first signaling, wherein the first signaling is used to determine a target indication value, and the target indication value is a non-negative integer; receives a first signal, or sends the first signal; wherein, a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value and the number of resource blocks occupied by the first signal is related to the reference length value.

As one sub-embodiment of the embodiment described above, the second communication equipment 450 corresponds to the first node in the present application.

As one embodiment, the first communication equipment 410 comprises: at least one processor and at least one memory, wherein the at least one memory comprises a computer program code; the at least one memory and the computer program code is configured to be used with the at least one processor. The first communication equipment 410 apparatus at least: sends first signaling, wherein the first signaling is used to determine a target indication value, and the target indication value is a non-negative integer; sends a first signal, or receives the first signal; wherein a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value and the number of resource blocks occupied by the first signal is related to the reference length value.

As one sub-embodiment of the embodiment described above, the first communication equipment 410 corresponds to the second node in the present application.

As one embodiment, the first communication equipment 410 comprises: A memory storing a computer readable instruction program that when executed by at least one processor generates an action, and the action comprises: sends first signaling, wherein the first signaling is used to determine a target indication value, and the target indication value is a non-negative integer; sends a first signal, or receives the first signal; wherein a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value and the number of resource blocks occupied by the first signal is related to the reference length value.

As one sub-embodiment of the embodiment described above, the first communication equipment 410 corresponds to the second node in the present application.

As one embodiment, at least one of {the antenna 452, the receiver 454, the multi-antenna receiving processor 458, the receiving processor 456, the controller/processor 459, the memory 460, and the data source 467} is used to receive the second information block in the present application.

As one embodiment, at least one of {the antenna 420, the transmitter 418, the multi-antenna transmitting processor 471, the transmitting processor 416, the controller/processor 475, and the memory 476} is used to send the second information block in the present application.

As one embodiment, at least one of {the antenna 452, the transmitter 454, the multi-antenna transmitting processor 458, the transmitting processor 468, the controller/processor 459, the memory 460, and the data source 467} is used to send the first information block in the present application.

As one embodiment, at least one of {the antenna 420, the receiver 418, the multi-antenna receiving processor 472, the receiving processor 470, the controller/processor 475, and the memory 476} is used to receive the first information block in the present application.

As one embodiment, at least one of {the antenna 452, the transmitter 454, the multi-antenna transmitting processor 458, the transmitting processor 468, the controller/processor 459, the memory 460, and the data source 467} is used to send the target information block in the present application.

As one embodiment, at least one of {the antenna 420, the receiver 418, the multi-antenna receiving processor 472, the receiving processor 470, the controller/processor 475, and the memory 476} is used to receive the target information block in the present application.

As one embodiment, at least one of {the antenna 452, the receiver 454, the multi-antenna receiving processor 458, the receiving processor 456, the controller/processor 459, the memory 460, and the data source 467} is used to receive the first signaling in the present application.

As one embodiment, at least one of {the antenna 420, the transmitter 418, the multi-antenna transmitting processor 471, the transmitting processor 416, the controller/processor 475, and the memory 476} is used to send the first signaling in the present application.

As one embodiment, at least one of {the antenna 452, the transmitter 454, the multi-antenna transmitting processor 458, the transmitting processor 468, the controller/processor 459, the memory 460, and the data source 467} is used to send the first signal in the present application.

As one embodiment, at least one of {the antenna 420, the receiver 418, the multi-antenna receiving processor 472, the receiving processor 470, the controller/processor 475, and the memory 476} is used to receive the first signal in the present application.

As one embodiment, at least one of {the antenna 452, the receiver 454, the multi-antenna receiving processor 458, the receiving processor 456, the controller/processor 459, the memory 460, and the data source 467} is used to receive the first signal in the present application.

As one embodiment, at least one of {the antenna 420, the transmitter 418, the multi-antenna transmitting processor 471, the transmitting processor 416, the controller/processor 475, and the memory 476} is used to send the first signal in the present application.

As one embodiment, the second communication equipment 450 comprises: at least one processor and at least one memory, wherein the at least one memory comprises a computer program code; the at least one memory and the computer program code is configured to be used with the at least one processor. The second communication equipment 450 apparatus at least: receives first signaling, wherein the first signaling is used to determine a target indication value, and the target indication value is a non-negative integer; receives a first signal, or sends a first signal; wherein the first difference value is related to the size of a BWP, and the first difference value is a positive integer greater than 1; the reference start index value is the index of a starting resource block occupied by the first signal, the target indication value has a corresponding relationship with the reference start index value, wherein the corresponding relationship between the target indication value and the reference start index value is related to the first difference value; the reference length value is the number of resource blocks occupied by the first signal, and the reference length value and the first difference value satisfy the following relationship: the remainder obtained by dividing the reference length value by the first difference value is greater than zero.

As one sub-embodiment of the embodiment described above, the second communication equipment 450 corresponds to the first node in the present application.
As one embodiment, the second communication equipment 450 comprises: A memory storing a computer readable instruction program that when executed by at least one processor generates an action, and the action comprises: receives first signaling, wherein the first signaling is used to determine a target indication value, and the target indication value is a non-negative integer; receives a first signal, or sends a first signal; wherein the first difference value is related to the size of a BWP, and the first difference value is a positive integer greater than 1; the reference start index value is the index of a starting resource block occupied by the first signal, the target indication value has a corresponding relationship with the reference start index value, wherein the corresponding relationship between the target indication value and the reference start index value is related to the first difference value; the reference length value is the number of resource blocks occupied by the first signal, and the reference length value and the first difference value satisfy the following relationship: the remainder obtained by dividing the reference length value by the first difference value is greater than zero.

As one sub-embodiment of the embodiment described above, the second communication equipment 450 corresponds to the first node in the present application.

As one embodiment, the first communication equipment 410 comprises: at least one processor and at least one memory, wherein the at least one memory comprises a computer program code; the at least one memory and the computer program code is configured to be used with the at least one processor. The first communication equipment 410 apparatus at least: sends first signaling, wherein the first signaling is used to determine a target indication value, and the target indication value is a non-negative integer; sends a first signal, or receives the first signal; wherein the first difference value is related to the size of a BWP, and the first difference value is a positive integer greater than 1; the reference start index value is the index of a starting resource block occupied by the first signal, the target indication value has a corresponding relationship with the reference start index value, wherein the corresponding relationship between the target indication value and the reference start index value is related to the first difference value; the reference length value is the number of resource blocks occupied by the first signal, and the reference length value and the first difference value satisfy the following relationship: the remainder obtained by dividing the reference length value by the first difference value is greater than zero.

As one sub-embodiment of the embodiment described above, the first communication equipment 410 corresponds to the second node in the present application.
As one embodiment, the first communication equipment 410 comprises: A memory storing a computer readable instruction program that when executed by at least one processor generates an action, and the action comprises: sends first signaling, wherein the first signaling is used to determine a target indication value, and the target indication value is a non-negative integer; sends a first signal, or receives the first signal; wherein the first difference value is related to the size of a BWP, and the first difference value is a positive integer greater than 1; the reference start index value is the index of a starting resource block occupied by the first signal, the target indication value has a corresponding relationship with the reference start index value, wherein the corresponding relationship between the target indication value and the reference start index value is related to the first difference value; the reference length value is the number of resource blocks occupied by the first signal, and the reference length value and the first difference value satisfy the following relationship: the remainder obtained by dividing the reference length value by the first difference value is greater than zero.

As one sub-embodiment of the embodiment described above, the first communication equipment 410 corresponds to the second node in the present application.

As one embodiment, the second communication equipment 450 comprises: at least one processor and at least one memory, wherein the at least one memory comprises a computer program code; the at least one memory and the computer program code is configured to be used with the at least one processor. The second communication equipment 450 apparatus at least: receives first signaling, wherein the first signaling is used to determine the target indication value, and the target indication value is a non-negative integer; wherein the first difference value is related to the size of a BWP, and the first difference value is a positive integer greater than 1; the reference start index value is the index of a starting resource block, the target indication value has a corresponding relationship with the reference start index value, wherein the corresponding relationship between the target indication value and the reference start index value is related to the first difference value; the reference length value is the number of assigned resource blocks, the target indication value corresponds to the reference length value, and the remainder obtained by dividing one numerical value in the range of values for the reference length value by the first difference value is greater than zero.

As one sub-embodiment of the embodiment described above, the second communication equipment 450 corresponds to the first node in the present application.
As one embodiment, the second communication equipment 450 comprises: A memory storing a computer readable instruction program that when executed by at least one processor generates an action, and the action comprises: receives first signaling, wherein the first signaling is used to determine the target indication value, and the target indication value is a non-negative integer; wherein the first difference value is related to the size of a BWP, and the first difference value is a positive integer greater than 1; the reference start index value is the index of a starting resource block, the target indication value has a corresponding relationship with the reference start index value, wherein the corresponding relationship between the target indication value and the reference start index value is related to the first difference value; the reference length value is the number of assigned resource blocks, the target indication value corresponds to the reference length value, and the remainder obtained by dividing one numerical value in the range of values for the reference length value by the first difference value is greater than zero.

As one sub-embodiment of the embodiment described above, the second communication equipment 450 corresponds to the first node in the present application.

As one embodiment, the first communication equipment 410 comprises: at least one processor and at least one memory, wherein the at least one memory comprises a computer program code; the at least one memory and the computer program code is configured to be used with the at least one processor. The first communication equipment 410 apparatus at least: sends first signaling, wherein the first signaling is used to determine the target indication value, and the target indication value is a non-negative integer; wherein the first difference value is related to the size of a BWP, and the first difference value is a positive integer greater than 1; the reference start index value is the index of a starting resource block, the target indication value has a corresponding relationship with the reference start index value, wherein the corresponding relationship between the target indication value and the reference start index value is related to the first difference value; the reference length value is the number of assigned resource blocks, the target indication value corresponds to the reference length value, and the remainder obtained by dividing one numerical value in the range of values for the reference length value by the first difference value is greater than zero.

As one sub-embodiment of the embodiment described above, the first communication equipment 410 corresponds to the second node in the present application.
As one embodiment, the first communication equipment 410 comprises: A memory storing a computer readable instruction program that when executed by at least one processor generates an action, and the action comprises: sends first signaling, wherein the first signaling is used to determine the target indication value, and the target indication value is a non-negative integer; wherein the first difference value is related to the size of a BWP, and the first difference value is a positive integer greater than 1; the reference start index value is the index of a starting resource block, the target indication value has a corresponding relationship with the reference start index value, wherein the corresponding relationship between the target indication value and the reference start index value is related to the first difference value; the reference length value is the number of assigned resource blocks, the target indication value corresponds to the reference length value, and the remainder obtained by dividing one numerical value in the range of values for the reference length value by the first difference value is greater than zero.

As one sub-embodiment of the embodiment described above, the first communication equipment 410 corresponds to the second node in the present application.

### Embodiment 5

Embodiment 5 exemplifies a signal transmission flow chart according to one embodiment of the present application, as shown in FIG. 5. In FIG. 5, communication is made between a first node U1 and a second node U2 via an air interface. In particular, at most one of the steps in dashed box F1 and the steps in dashed box F2 are present.

The first node U1, receives first signaling in Step S511; receives a first signal in Step S512; or sends the first signal in Step S513.

The second node U2, sends first signaling in Step S521, sends a first signal in Step S522, or receives the first signal in Step S523.

In Embodiment 5, the first signaling is used to determine a target indication value, and the target indication value is a non-negative integer.

As one sub-embodiment of Embodiment 5, a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value, and the number of resource blocks occupied by the first signal is related to the reference length value. the difference value of any two adjacent numerical values in the second numerical-value set is equal to the second difference value; the second difference value is not equal to the first difference value, and the second difference value is a positive integer.

As one sub-embodiment of Embodiment 5, a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value and the number of resource blocks occupied by the first signal is related to the reference length value; the difference value between any two adjacent numerical values in the second numerical-value set is equal to a second difference value; the second difference value is not smaller than the first difference value, and the second difference value is a positive integer; the reference start index value is equal to a non-negative integer multiple of the first difference value; for the first node U1, determination of both the reference start index value and the reference length value depends on the target indication value; the target indication value is equal to the product of a first target numerical value and a first intermediate value plus the product of a second target numerical value and a second intermediate value plus a third target numerical value; the first intermediate value is equal to the ratio of the reference start index value to the first difference value, and the second intermediate value is equal to the ratio of the reference length value to the second difference value; the first target numerical value is equal to 1 or -1, the second target numerical value is equal to a first reference numerical value or the product of the first reference numerical value and -1, the first numerical-value set is related to at least one of the size of the initial BWP and the size of CORESET 0, and the third target numerical value is related to the first reference numerical value.

As one sub-embodiment of Embodiment 5, the first difference value is related to the size of a BWP, and the first difference value is a positive integer greater than 1; the reference start index value is the index of a starting resource block occupied by the first signal, the target indication value has a corresponding relationship with the reference start index value, wherein the corresponding relationship between the target indication value and the reference start index value is related to the first difference value; the reference length value is the number of resource blocks occupied by the first signal, and the reference length value and the first difference value satisfy the following relationship: the remainder obtained by dividing the reference length value by the first difference value is greater than zero; the reference start index value is equal to a non-negative integer multiple of the first difference value.

As one sub-embodiment of Embodiment 5, the first difference value is related to the size of the activated BWP, and the first difference value is a positive integer greater than 1; the reference start index value is the index of a starting resource block occupied by the first signal, the target indication value has a corresponding relationship with the reference start index value, wherein the corresponding relationship between the target indication value and the reference start index value is related to the first difference value; the reference length value is the number of resource blocks occupied by the first signal, and the reference length value and the first difference value satisfy the following relationship: the remainder obtained by dividing the reference length value by the first difference value is greater than zero; the reference start index value is equal to a non-negative integer of the first difference value; for the first node U1, the determination of both the reference start index value and the reference length value depends on the target indication value; the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is a positive integer not greater than the first reference numerical value minus the first intermediate value; the first target indication value is equal to 1 or -1, the second target numerical value is equal to the first reference numerical value or the product of the first reference numerical value and -1, the first reference numerical value is equal to one of the size of the initial BWP and the size of CORESET 0, and the third target numerical value is related to the first reference numerical value.

As one sub-embodiment of Embodiment 5, the first difference value is related to the size of a BWP, and the first difference value is a positive integer greater than 1; the reference start index value is the index of a starting resource block, the target indication value has a corresponding relationship with the reference start index value, wherein the corresponding relationship between the target indication value and the reference start index value is related to the first difference value; the reference length value is the number of assigned resource blocks, the target indication value corresponds to the reference length value, and the remainder obtained by dividing one numerical value in the range of values for the reference length value by the first difference value is greater than zero; the numerical values in the range of values for the reference start index value are all non-negative integer multiples of the first difference value.

As one embodiment, the first node U1 is the first node in the present application.

As one embodiment, the second node U2 is the second node in the present application.

As one embodiment, the first node U1 is a UE.

As one embodiment, the first node U1 is a base station.

As one embodiment, the second node U2 is a base station.

As one embodiment, the second node U2 is a UE.

As one embodiment, the air interface between the second node U2 and the first node U1 is a Uu interface.

As one embodiment, the air interface between the second node U2 and the first node U1 comprises a cellular link.

As one embodiment, the air interface between the second node U2 and the first node U1 is a PC5 interface.

As one embodiment, the air interface between the second node U2 and the first node U1 comprises a sidelink.

As one embodiment, the air interface between the second node U2 and the first node U1 comprises a wireless interface between a base station equipment and a user equipment.

As one embodiment, the air interface between the second node U2 and the first node U1 comprises a wireless interface between a satellite equipment and a user equipment.

As one embodiment, the air interface between the second node U2 and the first node U1 comprises a wireless interface between a user equipment and a user equipment.

As one embodiment, the issues to be addressed by the present application include: how to improve the transmission performance of the system.

As one embodiment, the issues to be addressed by the present application include: how to determine the resource blocks occupied by the first signal.

As one embodiment, the issues to be addressed by the present application include: how to improve scheduling flexibility of the first signal.

As one embodiment, the issues to be addressed by the present application include: how to improve the utilization efficiency of the first signaling.

As one embodiment, the issues to be addressed by the present application include: how to optimize scheduling for the frequency domain using limited control signaling bits.

As one embodiment, the issues to be addressed by the present application include: how to optimize indication of resource assignment for a RedCap UE.

As one embodiment, the issues to be addressed by the present application include: how to optimize indication of resource assignment for a UE with high processing capabilities.

As one embodiment, the issues to be addressed by the present application include: how to optimize indication of resource assignment for a UE that supports XR (Extended Reality) service.

As one embodiment, the issues to be addressed by the present application include: how to optimize indication of resource assignment for a UE in an Internet of Vehicles/V2X scenario.

As one embodiment, the issues to be addressed by the present application include: how to optimize resource assignment based on the capabilities of the UE on radio frequency bandwidth and baseband bandwidth.

As one embodiment, the issues to be addressed by the present application include: how to adapt an effective resource assignment scheme based on UE capabilities.

As one embodiment, the step in dashed box F1 is present and the step in dashed box F2 is absent.

As one embodiment, the step in dashed box F1 is absent and the step in the dashed box F2 is present.

As one embodiment, the step in dashed box F1 is absent and the step in dashed box F2 is absent.

As one embodiment, the first node in the present application receives first signaling, wherein the first signaling is used to determine a target indication value, and the target indication value is a non-negative integer; wherein the first difference value is related to the size of a BWP, and the first difference value is a positive integer greater than 1; the reference start index value is the index of a starting resource block, the target indication value has a corresponding relationship with the reference start index value, wherein the corresponding relationship between the target indication value and the reference start index value is related to the first difference value; the reference length value is the number of assigned resource blocks, the target indication value corresponds to the reference length value, and the remainder obtained by dividing one numerical value in the range of values for the reference length value by the first difference value is greater than zero.

As one sub-embodiment of the embodiment described above, the numerical values in the range of values for the reference start index value are all non-negative integer multiples of the first difference value.

As one embodiment, the numerical values in the range of values for the reference start index value are all non-negative integer multiples of the first difference value.

As one embodiment, the remainder obtained by dividing at least one numerical value in the range of values for the reference length value by the first difference value is greater than zero.

### Embodiment 6

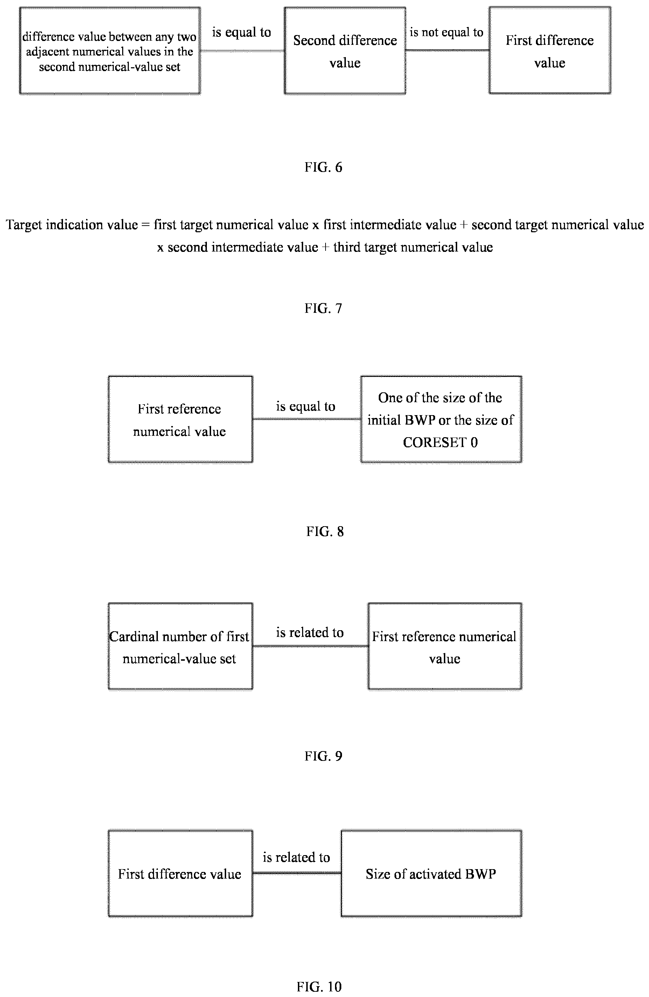

Embodiment 6 exemplifies a schematic diagram of the relationship between a second numerical-value set, a second difference value, and a first difference value, according to one embodiment of the present application, as shown in FIG. 6.

In Embodiment 6, the difference value between any two adjacent numerical values in the second numerical-value set is equal to a second difference value; the second difference value is not equal to the first difference value, and the second difference value is a positive integer.

As one embodiment, no two numerical values in the second numerical-value set are identical.

As one embodiment, the plurality of numerical values included in the second numerical-value set constitutes an arithmetic progression.

As one embodiment, "two adjacent numerical values in the second numerical-value set" includes the following meaning: the second numerical-value set does not contain any numerical value that is greater than whichever is smaller of these two adjacent numerical values and any numerical value that is smaller than whichever is greater of these two adjacent numerical values.

As one embodiment, a second given numerical value is any numerical value in the second numerical-value set; when the second given numerical value is the smallest numerical value in the second numerical-value set, one numerical value adjacent to the second given numerical value is the smallest numerical value greater than the second given numerical value in the second numerical-value set; when the second given numerical value is the greatest numerical value in the second numerical-value set, one numerical value adjacent to the second given numerical value is smaller than the greatest numerical value of the second given numerical value in the second numerical-value set; when the second given numerical value is a numerical value other than the smallest numerical value and the greatest numerical value in the second numerical-value set, two numerical values adjacent to the second given numerical value are the smallest numerical value greater than the second given numerical value in the second numerical-value set and the greatest numerical value smaller than the second given numerical value in the second numerical-value set, respectively.

As one embodiment, the difference value between two adjacent numerical values in the second numerical-value set refers to: the difference value between the larger of these two adjacent numerical values minus the smaller of these two adjacent numerical values.

### Embodiment 7

Embodiment 7 exemplifies an illustrative schematic diagram of a target indication value according to one embodiment of the present application, as shown in FIG. 7.

In Embodiment 7, the target indication value is equal to the product of a first target numerical value and a first intermediate value plus the product of a second target numerical value and a second intermediate value plus a third target numerical value.

As one embodiment, the first intermediate value is equal to the ratio of the reference start index value to the first difference value.

As one embodiment, the second intermediate value is equal to the ratio of the reference length value to the second difference value.

As one embodiment, the second difference value is equal to 1.

As one embodiment, the second difference value is smaller than the first difference value.

As one embodiment, the second difference value is not smaller than the first difference value.

As one embodiment, the first target numerical value is equal to one of 1 and -1.

As one embodiment, the first target numerical value is equal to 1.

As one embodiment, the first target numerical value is equal to -1.

As one embodiment, the first reference numerical value is equal to one of the size of the initial BWP and the size of CORESET 0.

As one embodiment, the second target numerical value is equal to one of the first reference numerical value or the product of the first reference numerical value and -1.

As one embodiment, the second target numerical value is equal to the first reference numerical value.

As one embodiment, the second target numerical value is equal to the product of the first reference numerical value and -1.

As one embodiment, the third target numerical value is related to the first reference numerical value.

As one embodiment, the third target numerical value is equal to the product of the first reference numerical value and -1.

As one embodiment, the third target numerical value is equal to the product of the first reference numerical value and the first reference numerical value plus the first reference numerical value plus the first reference numerical value minus 1.

As one embodiment, the first target numerical value is equal to 1, the second target numerical value is equal to the first reference numerical value, and the third target numerical value is equal to the product of the first reference numerical value and -1.

As one embodiment, the difference value of the second intermediate value minus 1 is not greater than the ratio of the first reference numerical value to 2, with the result rounded down to the nearest integer; the first target numerical value is equal to 1, the second target numerical value is equal to the first reference numerical value, and the third target numerical value is equal to the product of the first reference numerical value and -1.

As one embodiment, the first target numerical value is equal to -1, the second target numerical value is equal to the product of the first reference numerical value and -1, the third target numerical value is equal to the product of the first reference numerical value and the first reference numerical value plus the first reference numerical value plus the first reference numerical value minus 1.

As one embodiment, the difference value of the second intermediate value minus 1 is greater than the ratio of the first reference numerical value to 2, with the result rounded down to the nearest integer; the first target numerical value is equal to -1, the second target numerical value is equal to the product of the first reference numerical value and -1, and the third target numerical value is equal to the product of the first reference numerical value and the first reference numerical value plus the first reference numerical value plus the first reference numerical value minus 1.

As one embodiment, the difference value of the second intermediate value minus 1 is not greater than the ratio of the first reference numerical value to 2, with the result rounded down to the nearest integer.

As one embodiment, the difference value of the second intermediate value minus 1 is greater than the ratio of the first reference numerical value to 2, with the result rounded down to the nearest integer.

As one embodiment, the first target numerical value, the second target numerical value, and the third target numerical value are all related to the reference length value.

As one embodiment, the first target numerical value, the second target numerical value, and the third target numerical value are all related to the second intermediate value.

As one embodiment, the first target numerical value, the second target numerical value, and the third target numerical value are all related to the first reference numerical value.

As one embodiment, when the difference value of the second intermediate value minus 1 is not greater than the ratio of the first reference numerical value to 2, with the result rounded down to the nearest integer, when the first target numerical value is equal to 1, the second target numerical value is equal to the first reference numerical value, and the third target numerical value is equal to the [ratio of the] first reference numerical value to -1; when the difference value of the second intermediate value minus 1 is greater to the ratio of the first reference numerical value to 2, with the result rounded down to the nearest integer, the first target numerical value is equal to -1, the second target numerical value is equal to the product of the first reference numerical value to -1, the third target numerical value is equal to the product of the first reference numerical value and the first reference numerical value plus the first reference numerical value plus the first reference numerical value minus 1.

As one embodiment, the difference value of the second intermediate value minus 1 is not greater than the ratio of the first reference numerical value to 2, with the result rounded down to the nearest integer; the target indication value is equal to the first intermediate value plus the product of the first reference numerical value and the second intermediate value minus the first reference numerical value; the first intermediate value is equal to the ratio of the reference start index value to the first difference value, the second intermediate value is equal to the ratio of the reference length value to the second difference value; the first reference numerical value is equal to one of the size of the initial BWP and the size of CORESET 0.

As one embodiment, the target indication value is equal to the first intermediate value plus the product of the first reference numerical value and the second intermediate value minus the first reference numerical value; the first intermediate value is equal to the ratio of the reference start index value to the first difference value, the second intermediate value is equal to the ratio of the reference length value to the second difference value; the first reference numerical value is equal to one of the size of the initial BWP and the size of CORESET 0.

As one embodiment, the difference value of the second intermediate value minus 1 is greater than the ratio of the first reference numerical value to 2, with the result rounded down to the nearest integer; the target indication value is equal to the third target numerical value minus the first intermediate value minus the product of the first reference numerical value and the second intermediate value; the first intermediate value is equal to the ratio of the reference start index value to the first difference value, the second intermediate value is equal to the ratio of the reference length value to the second difference value; the first reference value is equal to one of the size of the initial BWP and the size of CORESET 0; the third target numerical value is related to the first reference numerical value.

As one embodiment, the target indication value is equal to the third target numerical value minus the first intermediate value minus the product of the first reference numerical value and the second intermediate value; the first intermediate value is equal to the ratio of the reference start index value to the first difference value, the second intermediate value is equal to the ratio of the reference length value to the second difference value; the first reference value is equal to one of the size of the initial BWP and the size of CORESET 0; the third target numerical value is related to the first reference numerical value.

### Embodiment 8

Embodiment 8 exemplifies an illustrative schematic diagram of the first reference numerical value according to one embodiment of the present application, as shown in FIG. 8.

In Embodiment 8, the first reference numerical value is equal to one of the size of the initial BWP and the size of CORESET 0.

As one embodiment, the first reference numerical value is equal to one of the size of the initial downlink BWP or the size of CORESET 0.

As one embodiment, the first reference numerical value is equal to the size of CORESET 0.

As one embodiment, the first reference numerical value is equal to the size of the initial downlink BWP (initial DL bandwidth part).

As one embodiment, the first reference numerical value is equal to the size of the initial uplink BWP (initial UL bandwidth part).

As one embodiment, the size of a BWP (bandwidth part) refers to the number of frequency domain resources included in this BWP.

As one embodiment, the size of a CORESET (control resource set) refers to the number of frequency domain resources included in this CORESET.

As one embodiment, the size of a BWP is equal to the number of RBs (resource blocks) included in this BWP.

As one embodiment, the size of a BWP is equal to the number of PRBs (physical resource blocks) included in this BWP.

As one embodiment, the size of a BWP is equal to the number of virtual resource blocks included in this BWP.

As one embodiment, the size of a CORESET is equal to the number of RBs included in this CORESET on the frequency domain.

As one embodiment, the size of a CORESET is equal to the number of PRBs included in this CORESET on the frequency domain.

As one embodiment, the size of a CORESET is equal to the number of virtual resource blocks included in this CORESET on the frequency domain.

As one embodiment, if CORESET 0 is configured, the first reference numerical value is equal to the size of CORESET 0; if CORESET 0 is not configured, the first reference numerical value is equal to the size of the initial downlink BWP (initial DL bandwidth part).

### Embodiment 9

Embodiment 9 exemplifies a schematic diagram of the relationship between a first numerical-value set and a first reference numerical value, according to one embodiment of the present application, as shown in FIG. 9.

In Embodiment 9, the cardinal number of the first numerical-value set is associated with the first reference numerical value.

As one embodiment, the cardinal number of the first numerical-value set is not greater than the first reference numerical value.

As one embodiment, the cardinal number of the first numerical-value set is equal to the first reference numerical value.

As one embodiment, the cardinal number of the second numerical-value set is equal to the first reference numerical value.

As one embodiment, the cardinal number of the second numerical-value set is equal to the cardinal number of the first numerical-value set.

As one embodiment, the cardinal number of the second numerical-value set is not greater than the cardinal number of the first numerical-value set.

As one embodiment, the cardinal number of the second numerical-value set is greater than the cardinal number of the first numerical-value set.

As one embodiment, the cardinal number of the second numerical-value set is equal to the cardinal number of the first numerical-value set plus 1.

As one embodiment, the cardinal number of the second numerical-value set is equal to a positive integer multiple of the cardinal number of the first numerical-value set.

As one embodiment, the cardinal number of the second numerical-value set is equal to a positive integer multiple of the cardinal number of the first numerical-value set plus 1.

As one embodiment, the cardinal number of the second numerical-value set is equal to a positive integer multiple of the cardinal number of the first numerical-value set plus M, wherein the M is related to the first threshold.

As one embodiment, the cardinal number of the second numerical-value set is not greater than the first threshold.

As one embodiment, one of the second numerical-value set is a positive integer multiple of the first difference value.

As one embodiment, the second numerical-value set is related to a first threshold.

As one embodiment, the greatest numerical value in the second numerical-value set is not greater than the first threshold.

As one embodiment, the greatest numerical value in the second numerical-value set is equal to the first threshold.

As one embodiment, the cardinal number of the second numerical-value set is related to the first threshold.

As one embodiment, when the first threshold is greater than the first reference numerical value, the cardinal number of the second numerical-value set is equal to the first reference numerical value; when the first threshold is not greater than the first reference numerical value, the cardinal number of the second numerical-value set is equal to the first threshold.

### Embodiment 10

Embodiment 10 exemplifies an illustrative schematic diagram of the first difference value according to one embodiment of the present application, as shown in FIG. 10.

In Embodiment 10, the first difference value is associated with the size of the activated BWP.

As one embodiment, the activated BWP is for a cell.

As one embodiment, the first signal is sent on the activated BWP.

As an embodiment, the first signaling is sent on the activated BWP.

As one embodiment, one BWP comprises a plurality of resource blocks.

As one embodiment, the size of the activated BWP is used to determine the first difference value.

As one embodiment, the size of the activated BWP and the size of the initial downlink BWP are both used to determine the first difference value.

As one embodiment, the size of the activated BWP and the size of the initial uplink BWP are both used to determine the first difference value.

As one embodiment, the size of the activated BWP and the size of CORESET 0 are both used to determine the first difference value.

As one embodiment, the size of the activated BWP and the first reference numerical value are both used to determine the first difference value.

As one embodiment, the first difference value depends on the size of the activated BWP.

As one embodiment, the first difference value depends on the size of the activated BWP and the first reference numerical value.

As one embodiment, the first difference value is not greater than the ratio of the size of the activated BWP to the first reference numerical value, with the result rounded down to the nearest integer.

As one embodiment, the size of the activated BWP is greater than the first reference numerical value, wherein the first reference numerical value is equal to one of the size of the initial BWP and the size of CORESET 0, the first difference value is equal to the greatest numerical value that is not greater than the ratio of the size of the activated BWP to the size of the first reference numerical value in a feature numerical-value set, with the result rounded down to the nearest integer, and the feature numerical-value set comprises a plurality of positive integers.

As one embodiment, the size of the activated BWP is not smaller than two times the first reference numerical value.

As one embodiment, the feature numerical-value set is predefined.

As one embodiment, the feature numerical-value set comprises a plurality of positive integers.

As one embodiment, the feature numerical-value set comprises 1, 2, 4 and 8.

As one embodiment, the greatest value in the feature numerical-value set is not greater than 8.

As one embodiment, the greatest value in the feature numerical-value set is not greater than 16.

As one embodiment, the greatest value in the feature numerical-value set is not greater than 32.

As one embodiment, the greatest value in the feature numerical-value set is not greater than 64.

As one embodiment, the greatest value in the feature numerical-value set is not greater than 128.

As one embodiment, the greatest value in the feature numerical-value set is not greater than 256.

As one embodiment, the greatest value in the feature numerical-value set is not greater than 512.

As one embodiment, the greatest value in the feature numerical-value set is not greater than 1,024.

As one embodiment, the feature numerical-value set is configurable.

### Embodiment 11

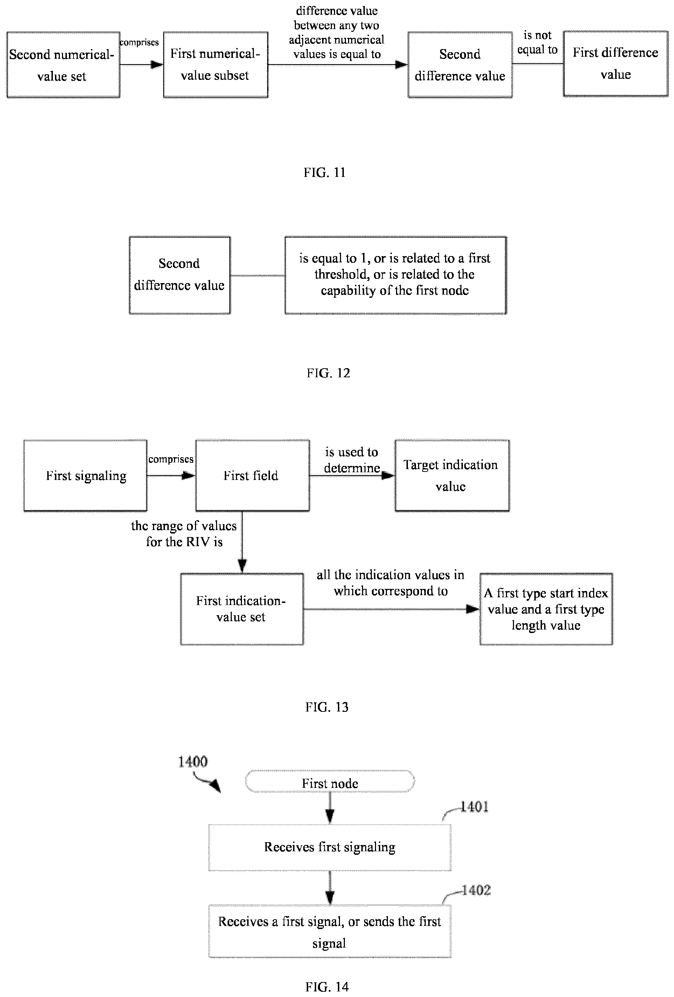

Embodiment 11 exemplifies a schematic diagram of the relationship between a second numerical-value set, a first numerical-value subset, a second difference value, and a first difference value, according to one embodiment of the present application, as shown in FIG. 11.

In Embodiment 11, the second numerical-value set comprises a first numerical-value subset, wherein the first numerical-value subset comprises a plurality of numerical values, the difference value between any two adjacent numerical values in the first difference value is equal to a second difference value, the second difference value is not equal to the first difference value, and the second difference value is a positive integer.

As one embodiment, the first numerical-value subset is the second numerical-value set.

As one embodiment, the first numerical-value subset is a proper subset of the second numerical-value set.

As one embodiment, no two numerical values in the first numerical-value subset are identical.

As one embodiment, the plurality of numerical values included in the first numerical-value subset constitutes an arithmetic progression.

As one embodiment, "two adjacent numerical values in the first numerical-value subset" includes the following meaning: the first numerical-value subset does not contain any numerical value that is greater than whichever is smaller of these two adjacent numerical values and any numerical value that is smaller than whichever is greater of these two adjacent numerical values.

As one embodiment, a third given numerical value is any numerical value in the first numerical-value subset; when the third given numerical value is the smallest numerical value in the first numerical-value subset, one numerical value adjacent to the third given numerical value is the smallest numerical value greater than the third given numerical value in the first numerical-value subset; when the third given numerical value is the greatest numerical value in the first numerical-value subset, one numerical value adjacent to the third given numerical value is smaller than the greatest numerical value of the third given numerical value in the first numerical-value subset; when the third given numerical value is a numerical value other than the smallest numerical value and the greatest numerical value in the first numerical-value subset, two numerical values adjacent to the third given numerical value are the smallest numerical value greater than the third given numerical value in the first numerical-value subset and the greatest numerical value smaller than the third given numerical value in the first numerical-value subset, respectively.

As one embodiment, the difference value between two adjacent numerical values in the first numerical-value subset refers to: the difference value between the larger of these two adjacent numerical values minus the smaller of these two adjacent numerical values.

As one embodiment, the second difference value is smaller than the first difference value.

As one embodiment, the second difference value is greater than the first difference value.

As one embodiment, the second numerical-value set comprises a second numerical-value subset, wherein the second numerical-value subset comprises a plurality of numerical values, and the difference value between any two adjacent numerical values in the second numerical-value subset is equal to the first difference value.

As one embodiment, the second numerical-value subset is a proper subset of the second numerical-value set.

As one embodiment, any numerical value in the second numerical-value subset is a positive integer multiple of the first difference value.

As one embodiment, no two numerical values in the second numerical-value subset are identical.

As one embodiment, the plurality of numerical values included in the second numerical-value subset constitutes an arithmetic progression.

As one embodiment, "two adjacent numerical values in the second numerical-value subset" includes the following meaning: the second numerical-value subset does not contain any numerical value that is greater than whichever is smaller of two adjacent numerical values and any numerical value that is smaller than whichever is greater of these two adjacent numerical values.

As one embodiment, a second given numerical value is any numerical value in the second numerical-value subset; when the second given numerical value is the smallest numerical value in the second numerical-value subset, one numerical value adjacent to the second given numerical value is the smallest numerical value greater than the second given numerical value in the second numerical-value subset; when the second given numerical value is the greatest numerical value in the second numerical-value subset, one numerical value adjacent to the second given numerical value is smaller than the greatest numerical value of the second given numerical value in the second numerical-value subset; when the second given numerical value is a numerical value other than the smallest numerical value and the greatest numerical value in the second numerical-value subset, two numerical values adjacent to the second given numerical value are the smallest numerical value greater than the second given numerical value in the second numerical-value subset and the greatest numerical value smaller than the second given numerical value in the second numerical-value subset, respectively.

As one embodiment, the difference value between two adjacent numerical values in the second numerical-value subset refers to: the difference value between the larger of these two adjacent numerical values minus the smaller of these two adjacent numerical values.

As one embodiment, the second numerical-value set only comprises the second numerical-value subset and a positive integer multiple that is not a multiple of the first difference value other than the second numerical-value subset.

As one embodiment, the second numerical-value set comprises the first threshold.

As one embodiment, the second numerical-value set comprises a positive integer that is not a multiple of the first difference value and is not greater than the first threshold.

As one embodiment, the second numerical-value set comprises a third numerical-value subset, wherein the third numerical-value subset comprises a plurality of numerical values, a difference value between any two adjacent values in the third numerical-value subset is equal to the first difference value, and no numerical value in the third numerical-value subset is divisible by the first difference value.

As one embodiment, the third numerical-value subset is the second numerical-value set.

As one embodiment, the third numerical-value subset is a proper subset of the second numerical-value set.

As one embodiment, no two numerical values in the third numerical-value subset are identical.

As one embodiment, the plurality of numerical values included in the third numerical-value subset constitutes an arithmetic progression.

As one embodiment, "two adjacent numerical values in the third numerical-value subset" includes the following meaning: the third numerical-value subset does not contain any numerical value that is greater than whichever is smaller of these two adjacent numerical values and any numerical value that is smaller than whichever is greater of these two adjacent numerical values.

As one embodiment, a fourth given numerical value is any numerical value in the third numerical-value subset; when the fourth given numerical value is the smallest numerical value in the third numerical-value subset, one numerical value adjacent to the fourth given numerical value is the smallest numerical value greater than the fourth given numerical value in the third numerical-value subset; when the fourth given numerical value is the greatest numerical value in the third numerical-value subset, one numerical value adjacent to the fourth given numerical value is smaller than the greatest numerical value of the fourth given numerical value in the third numerical-value subset; when the fourth given numerical value is a numerical value other than the smallest numerical value and the greatest numerical value in the third numerical-value subset, two numerical values adjacent to the fourth given numerical value are the smallest numerical value greater than the fourth given numerical value in the third numerical-value subset and the greatest numerical value smaller than the fourth given numerical value in the third numerical-value subset, respectively.

As one embodiment, the difference value between two adjacent numerical values in the third numerical-value subset refers to: the difference value between the larger of these two adjacent numerical values minus the smaller of these two adjacent numerical values.

### Embodiment 12

Embodiment 12 exemplifies an illustrative schematic diagram of a second difference value according to one embodiment of the present application, as shown in FIG. 12.

In Embodiment 12, the second difference value is equal to 1, or the second difference value is related to a first threshold, or the second difference value is related to the capabilities of the first node in the present application.

As one embodiment, the second difference value is equal to 1.

As one embodiment, the second difference value is related to the first threshold.

As one embodiment, the second difference value is related to the capabilities of the first node.

As one embodiment, the second difference value is related to the size of the activated BWP.

As one embodiment, the second difference value depends on the first threshold.

As one embodiment, the second difference value is equal to a positive integer that is not greater than the ratio of the first threshold to the first reference numerical value.

As one embodiment, the second difference value is equal to the greatest numerical value of the ratio of the first threshold to the first reference numerical value in the feature numerical-value set, with the result rounded down to the nearest integer.

As one embodiment, when the first threshold is greater than the first reference numerical value, the second difference value is equal to a positive integer that is not greater than the ratio of the first threshold to the first reference numerical value; and when the first threshold is not greater than the first reference numerical value, the second difference value is equal to 1.

As one embodiment, the one UE capability information element reported by the first node is used to determine that the second difference value is equal to 1.

As one embodiment, the one UE capability information element reported by the first node is used to indicate that the second difference value is equal to 1.

### Embodiment 13

Embodiment 13 exemplifies a schematic diagram of the relationship between first signaling, a first field, a target indication value, and a first indication-value set, according to one embodiment of the present application, as shown in FIG. 13.

In Embodiment 13, the first signaling comprises a first field, wherein the first field in the first signaling is used to determine the target indication value; the first field in the first signaling in the range of values for an RIV is a first indication-value set, the first indication-value set comprises a plurality of indication values, and each indication value in the first indication-value set corresponds to a first type start index value and a first type length value; for any indication value in the first indication-value set: the corresponding first type start index value is equal to one numerical value in the first numerical-value set and the corresponding first type length value is equal to one numerical value in the second numerical-value set.

As one embodiment, the first field comprises at least one bit.

As one embodiment, the first field is a frequency domain resource assignment field.

As one embodiment, the first field is used to indicate frequency domain resource assignment.

As one embodiment, the first node uses resource allocation type 1.

As one embodiment, the first numerical-value set comprises a plurality of numerical values, and the difference value between any two adjacent values in the first numerical-value set is equal to the first difference value, and the first difference value is a positive integer greater than 1.

As one embodiment, the second numerical-value set comprises a plurality of numerical values, the numerical values in the second numerical-value set are all positive integers, and at least one numerical value in the second numerical-value set is not a multiple of the first difference value.

As one embodiment, the second numerical-value set comprises a plurality of numerical values, and the numerical values in the second numerical-value set are all positive integers, the difference value between any two adjacent numerical values in the second numerical-value set is equal to a second difference value; the second difference value is not equal to the first difference value, and the second difference value is a positive integer.

As one embodiment, the expression "the first field in the first signaling is used to determine the target indication value" comprises: the first field in the first signaling comprises the target indication value.

As one embodiment, the expression "the first field in the first signaling is used to determine the target indication value" comprises: bits in the first field of the first signaling represent the target indication value.

As one embodiment, the expression "the first field in the first signaling is used to determine the target indication value" comprises: the target indication value is equal to a value in the first field of the first signaling.

As one embodiment, the indication values in the first indication-value set are all valid RIVs.

As one embodiment, the indication values in the first indication-value set are all defined RIVs.

As one embodiment, the indication values in the first indication-value set are all defined and valid RIVs.

As one embodiment, when only when one RIV is valid, this RIV is used to indicate frequency domain resource assignment.

As one embodiment, when one RIV is invalid, the receiver of the RIV determines how to process it.

As one embodiment, the target indication value is any indication value in the first indication-value set.

As one embodiment, the reference start index value is the first type start index value corresponding to the target indication value, and the reference length value is the first type length value corresponding to the target indication value.

As one embodiment, one first type start index value is the index of a starting resource block.

As one embodiment, one first type length value is the number of continuously assigned resource blocks.

As one embodiment, one first type start index value is the index of a starting resource block of one candidate.

As one embodiment, one first type length value is the number of continuously assigned resource blocks of one candidate.

As one embodiment, one first type start index value corresponds to a starting resource block of one candidate.

As one embodiment, one first type length value corresponds to a number of continuously assigned resource blocks of one candidate.

As one embodiment, for any numerical value in the first numerical-value set, a first type start index value corresponding to at least one indication value in the first indication-value set is equal to this numerical value in the first numerical-value set.

As one embodiment, for any numerical value in the second numerical-value set, a first type length value corresponding to at least one indication value in the first indication-value set is equal to this numerical value in the second numerical-value set.

### Embodiment 14

Embodiment 14 exemplifies a processing flow chart of a first node according to one embodiment of the present application, as shown in FIG. 14.

In Embodiment 14, the first node in the present application receives first signaling in Step 1401; receives a first signal, or sends the first signal in Step 1402.

In Embodiment 14, the first signaling is used to determine a target indication value, and the target indication value is a non-negative integer; the first difference value is related to the size of a BWP, and the first difference value is a positive integer greater than 1; the reference start index value is the index of a starting resource block occupied by the first signal, the target indication value has a corresponding relationship with the reference start index value, wherein the corresponding relationship between the target indication value and the reference start index value is related to the first difference value; the reference length value is the number of resource blocks occupied by the first signal, and the reference length value and the first difference value satisfy the following relationship: the remainder obtained by dividing the reference length value by the first difference value is greater than zero.

As one embodiment, the first difference value is related to the size of the activated BWP.

As one embodiment, the first difference value depends on the size of the activated BWP.

As one embodiment, the size of the activated BWP is used to determine the first difference value.

As one embodiment, the first difference value is associated with the size of the initial BWP.

As one embodiment, the first difference value depends on the size of the initial BWP.

As one embodiment, the size of the initial BWP is used to determine the first difference value.

As one embodiment, the expression "the target indication value has a corresponding relationship with the reference start index value, wherein the corresponding relationship between the target indication value and the reference start index value is related to the first difference value" comprises: a first intermediate value is equal to the ratio of the reference start index value to the first difference value, and the target indication value and the first intermediate value satisfy a predefined equation relationship.

As one embodiment, the expression "the target indication value has a corresponding relationship with the reference start index value, wherein the corresponding relationship between the target indication value and the reference start index value is related to the first difference value" comprises: the reference start index value is associated with the target indication value.

As one embodiment, the target indication value is an indication of the reference start index value.

As one embodiment, the target indication value is an indication of the reference length value.

As one embodiment, for the first node, the target indication value is used to determine the reference start index value.

As one embodiment, for the first node, both the target indication value and the first difference value are used to determine the reference start index value.

As one embodiment, for the first node, the reference start index value depends on the target indication value and the size of the activated BWP.

As one embodiment, for the first node, the reference start index value depends on the target indication value and the first reference numerical value.

As one embodiment, for the first node, the reference start index value depends on the target indication value, the size of the activated BWP and the first reference numerical value.

As one embodiment, for the first node, the reference start index value depends on the target indication value and the first difference value.

As one embodiment, for the first node, the target indication value is used to determine the index of a unique starting resource block.

As one embodiment, the target indication value indicates a first intermediate value, and the reference start index value is equal to the product of the first intermediate value and the first difference value.

As one embodiment, the corresponding relationship between the target indication value and the reference start index value depends on the first difference value.

As one embodiment, the definition of the first node based on a reference indication value is the reference start index value, with the target indication value used as an input.

As one embodiment, for the first node, the corresponding relationship between the target indication value and the reference start index value comprises: mapping the target indication value to the reference start index value.

As one embodiment, the first node performs mapping from the target indication value to the reference start index value based on the definition of a resource indication value (RIV).

As one embodiment, the first node performs mapping from the target indication value to a first intermediate value based on the definition of a resource indication value (RIV), and the reference start index value is equal to the product of the first intermediate value and the first difference value.

As one embodiment, the target indication value is equal to the first intermediate value plus the product of the first reference numerical value and the second intermediate value minus the first reference numerical value; the first intermediate value is equal to the ratio of the reference start index value to the first difference value, the second intermediate value is a positive integer not greater than the first reference numerical value minus the first intermediate value; the first reference numerical value is equal to one of the size of the initial BWP and the size of CORESET 0.

As one sub-embodiment of the embodiment described above, the difference value of the second intermediate value minus 1 is not greater than the ratio of the first reference numerical value to 2, with the result rounded down to the nearest integer.

As one embodiment, the target indication value is equal to a third target numerical value minus the first intermediate value minus the product of the first reference numerical value and the second intermediate value; the first intermediate value is equal to the ratio of the reference start index value to the first difference value, the second intermediate value is a positive integer not greater than the first reference numerical value minus the first intermediate value; the first reference value is equal to one of the size of the initial BWP and the size of CORESET 0; the third target numerical value is related to the first reference numerical value.

As one sub-embodiment of the embodiment described above, the difference value of the second intermediate value minus 1 is greater than the ratio of the first reference numerical value to 2, with the result rounded down to the nearest integer.

As one sub-embodiment of the embodiment described above, the third target numerical value is equal to the product of the first reference numerical value to the first reference numerical value plus the first reference numerical value minus 1.

As one embodiment, the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is a positive integer not greater than the first reference numerical value minus the first intermediate value; the first target indication value is equal to 1 or -1, the second target numerical value is equal to the first reference numerical value or the product of the first reference numerical value and -1, the first reference numerical value is equal to one of the size of the initial BWP and the size of CORESET 0, and the third target numerical value is related to the first reference numerical value.

As one embodiment, the meaning of "the remainder obtained by dividing one numerical value by the first difference value is greater than zero" includes: the result obtained by the first difference value of this numerical modulus (mod) is greater than zero.

As one embodiment, the meaning of "the remainder obtained by dividing one numerical value by the first difference value is greater than zero" includes: this numerical value is not divisible by the first difference value.

As one embodiment, the reference start index value is associated with the target indication value.

As one embodiment, the target indication value is used to determine the reference start index value.

As one embodiment, the target indication value is used to indicate the reference start index value.

As one embodiment, for the first node, the reference start index value depends on the target indication value.

As one embodiment, the reference length value is associated with the target indication value.

As one embodiment, the target indication value is used to determine the reference length value.

As one embodiment, the target indication value is used to indicate the reference length value.

As one embodiment, for the first node, the reference length value depends on the target indication value.

As one embodiment, the reference start index value is equal to a non-negative integer multiple of the first difference value.

As one embodiment, the target indication value corresponds to the reference start index value and the reference length value.

As one embodiment, the reference length value depends on the target indication value

As one embodiment, the expression "the target indication value has a corresponding relationship with the reference start index value, wherein the corresponding relationship between the target indication value and the reference start index value is related to the first difference value" comprises:
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is a positive integer not greater than the first reference numerical value minus the first intermediate value; the first target indication value is equal to 1 or -1, the second target numerical value is equal to the first reference numerical value or the product of the first reference numerical value and -1, the first reference numerical value is equal to one of the size of the initial BWP and the size of CORESET 0, and the third target numerical value is related to the first reference numerical value.

As one embodiment, the expression "the target indication value has a corresponding relationship with the reference start index value, wherein the corresponding relationship between the target indication value and the reference start index value is related to the first difference value" comprises:
the target indication value is equal to the first intermediate value plus the product of the first reference numerical value and the second intermediate value minus the first reference numerical value; the first intermediate value is equal to the ratio of the reference start index value to the first difference value, the second intermediate value is a positive integer not greater than the first reference numerical value minus the first intermediate value; the first reference numerical value is equal to one of the size of the initial BWP and the size of CORESET 0.

As one embodiment, the expression "the target indication value has a corresponding relationship with the reference start index value, wherein the corresponding relationship between the target indication value and the reference start index value is related to the first difference value" comprises:
the target indication value is equal to a third target numerical value minus the first intermediate value minus the product of the first reference numerical value and the second intermediate value; the first intermediate value is equal to the ratio of the reference start index value to the first difference value, the second intermediate value is a positive integer not greater than the first reference numerical value minus the first intermediate value; the first reference value is equal to one of the size of the initial BWP and the size of CORESET 0; the third target numerical value is related to the first reference numerical value.

### Embodiment 15

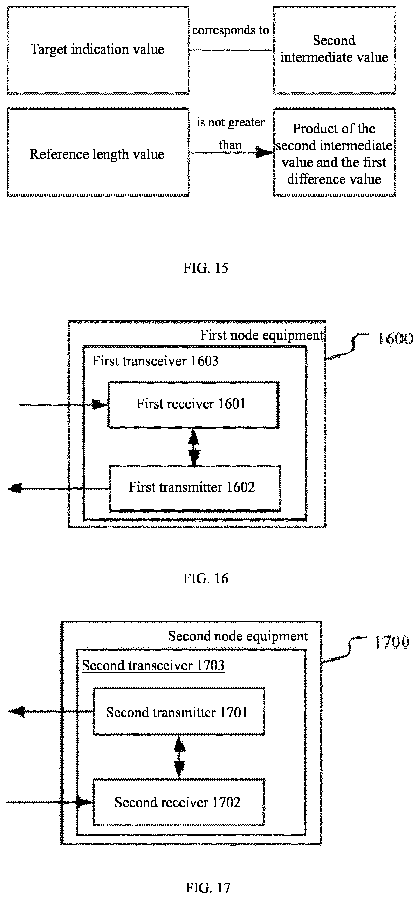

Embodiment 15 exemplifies a schematic diagram of the relationship between a target indication value, a second intermediate value, and a reference length value, according to one embodiment of the present application, as shown in FIG. 15.

In Embodiment 15, the target indication value corresponds to a second intermediate value, and the reference length value is not greater than the product of the second intermediate value and the first difference value.

As one embodiment, the target indication value corresponds to a reference start index value and a reference length value.

As one embodiment, the expression "the target indication value corresponds to a reference start index value and a reference length value" comprises: the target indication value corresponds to a second intermediate value, and the reference length value is associated with the second intermediate value.

As one embodiment, the target indication value corresponds to the reference length value.

As one embodiment, the expression "the target indication value corresponds to the reference length value" comprises: for the first node, the target indication value indicates the reference length value.

As one embodiment, for the first node, the target indication value indicates the reference start index value and the reference length value.

As one embodiment, the expression "the target indication value corresponds to the reference length value" comprises: the reference length value depends on the target indication value.

As one embodiment, the expression "the target indication value corresponds to the reference length value" comprises: the target indication value corresponds to a second intermediate value, and the reference length value is associated with the second intermediate value.

As one embodiment, the expression "the target indication value corresponds to a second intermediate value" comprises: the target indication value indicates a second intermediate value.

As one embodiment, the corresponding relationship between the target indication value and the second intermediate value is based on the definition of an RIV.

As one embodiment, the expression "the target indication value corresponds to a second intermediate value" comprises:
the target indication value is equal to the first intermediate value plus the product of the first reference numerical value and the second intermediate value minus the first reference numerical value; the first intermediate value is equal to the ratio of the reference start index value to the first difference value, the second intermediate value is a positive integer not greater than the first reference numerical value minus the first intermediate value; the first reference numerical value is equal to one of the size of the initial BWP and the size of CORESET 0.

As one sub-embodiment of the embodiment described above, the difference value of the second intermediate value minus 1 is not greater than the ratio of the first reference numerical value to 2, with the result rounded down to the nearest integer.

As one embodiment, the expression "the target indication value corresponds to a second intermediate value" comprises:
the target indication value is equal to a third target numerical value minus the first intermediate value minus the product of the first reference numerical value and the second intermediate value; the first intermediate value is equal to the ratio of the reference start index value to the first difference value, the second intermediate value is a positive integer not greater than the first reference numerical value minus the first intermediate value; the first reference value is equal to one of the size of the initial BWP and the size of CORESET 0; the third target numerical value is related to the first reference numerical value.

As one sub-embodiment of the embodiment described above, the difference value of the second intermediate value minus 1 is greater than the ratio of the first reference numerical value to 2, with the result rounded down to the nearest integer.

As one sub-embodiment of the embodiment described above, the third target numerical value is equal to the product of the first reference numerical value to the first reference numerical value plus the first reference numerical value minus 1.

As one embodiment, the expression "the target indication value corresponds to a second intermediate value" comprises: the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is a positive integer not greater than the first reference numerical value minus the first intermediate value; the first target indication value is equal to 1 or -1, the second target numerical value is equal to the first reference numerical value or the product of the first reference numerical value and -1, the first reference numerical value is equal to one of the size of the initial BWP and the size of CORESET 0, and the third target numerical value is related to the first reference numerical value.

As one embodiment, the expression "the reference length value is associated with the second intermediate value" comprises: the reference length value is equal to the second intermediate value.

As one embodiment, the expression "the reference length value is associated with the second intermediate value" comprises: the reference length value is not greater than the second intermediate value.

As one embodiment, the expression "the reference length value is associated with the second intermediate value" comprises: the reference length value is equal to the product of the second intermediate value and the second difference value.

As one embodiment, the expression "the reference length value is associated with the second intermediate value" comprises: the reference length value is not greater than the product of the second intermediate value and the second difference value.

As one embodiment, the expression "the reference length value is associated with the second intermediate value" comprises: the reference length value is not greater than the product of the second intermediate value and the first difference value.

As one embodiment, the expression "the reference length value is associated with the second intermediate value" comprises: the reference length value is equal to whichever is smaller of the product of the second intermediate value and the second difference value, and a first threshold.

As one embodiment, the expression "the reference length value is associated with the second intermediate value" comprises: the reference length value is not greater than whichever is smaller of the second intermediate value and a first threshold.

As one embodiment, the expression "the reference length value is associated with the second intermediate value" comprises: the reference length value is not greater than whichever is smaller of the product of the second intermediate value and the second difference value, and a first threshold.

As one embodiment, the expression "the reference length value is associated with the second intermediate value" comprises: the reference length value is equal to whichever is smaller of the product of the second intermediate value and the first difference value, and a first threshold.

As one embodiment, the expression "the reference length value is associated with the second intermediate value" comprises: the reference length value is not greater than whichever is smaller of the product of the second intermediate value and the first difference value, and a first threshold.

As one embodiment, the reference length value depends on the second intermediate value.

As one embodiment, the reference length value is equal to the product of the second intermediate value and the first difference value.

As one embodiment, the reference length value is not greater than the product of the second intermediate value and the first difference value.

As one embodiment, the reference length value is equal to the product of the second intermediate value and the second difference value.

As one embodiment, the reference length value is not greater than the product of the second intermediate value and the second difference value.

As one embodiment, the reference length value is equal to whichever is smaller of the product of the second intermediate value and the second difference value, and a first threshold.

As one embodiment, the second difference value is equal to 1.

As one embodiment, the second difference value is smaller than the first difference value.

As one embodiment, the second difference value is not greater than the first difference value.

As one embodiment, the reference length value is equal to whichever is smaller of the product of the second intermediate value and the first difference value, and a first threshold.

As one embodiment, the reference length value is related to the size relationship between the product of the second intermediate value and the first difference value, and a first threshold.

As one embodiment, the reference length value depends on the size relationship between the product of the second intermediate value and the first difference value, and a first threshold.

As one embodiment, the size relationship between the product of the second intermediate value and the first difference value, and a first threshold is used to determine the reference length value.

As one embodiment, when the product of the second intermediate value and the first difference value is greater than a first threshold, the reference length value is equal to the product of the second intermediate value and the second difference value, the second difference value is smaller than the first difference value; and when the product of the second intermediate value and the first difference value is not greater than the first threshold, the reference length value is equal to the product of the second intermediate value and the first difference value.

As one embodiment, the second difference value is equal to one of 1, 2, 4, and 8.

As one embodiment, the second difference value is equal to one numerical value that is smaller than the first difference value in a feature numerical-value set.

As one embodiment, the second difference value is equal to the greatest numerical value that is smaller than the first difference value in a feature numerical-value set.

As one embodiment, the first threshold is configurable.

As one embodiment, the first threshold is configured for RRC signaling.

As one embodiment, the first threshold is related to UE capabilities.

As one embodiment, the first threshold is indicated by the UE capability information reported by the first node.

As one embodiment, the first threshold is one in the second numerical-value set.

As one embodiment, the first node sends a target information block, and the target information block comprises UE capability information; based on the target information block, the second difference value is equal to 1.

As one embodiment, the first node sends a target information block, and the target information block comprises UE capability information; based on the target information block, the second difference value is equal to a positive integer that is smaller than the first difference value.

As one embodiment, the first node sends a target information block, and the target information block comprises UE capability information; based on the target information block, the first threshold is present.

As one embodiment, the expression "the target information block comprises UE capability information" comprises: the target information block comprises at least one UE capability information element.

As one embodiment, the name of the target information block comprises RedCap.

As one embodiment, the name of a UE capability information element included in the target information block comprises RedCap.

As one embodiment, the target information block is used to indicate the UE capabilities supported by a RedCap UE (a UE with reduced capabilities).

As one embodiment, the target information block is physical layer signaling.

As one embodiment, the target information block comprises physical layer signaling.

As one embodiment, the target information block is downlink control signaling.

As one embodiment, the target information block is dynamically configured.

As one embodiment, the target information block comprises signaling of Layer 1 (L1).

As one embodiment, the target information block comprises control signaling of Layer 1 (L1).

As one embodiment, the target information block comprises one or a plurality of fields in a physical layer signaling.

As one embodiment, the target information block comprises higher layer signaling.

As one embodiment, the target information block comprises one or a plurality of fields in a higher layer signaling.

As one embodiment, the target information block comprises RRC (Radio Resource Control) signaling.

As one embodiment, the target information block comprises a MAC CE (Medium Access Control Layer Control Element).

As one embodiment, the target information block comprises one or a plurality of fields in RRC signaling.

As one embodiment, the target information block comprises one or a plurality of fields in a MAC CE.

As one embodiment, the target information block comprises one or a plurality of fields in an IE (Information Element).

As one embodiment, the sending of the target information block is prior to the receiving of the first signaling.

As one embodiment, the remainder obtained by dividing the first threshold by the first difference value is greater than zero.

As one embodiment, the first threshold and the first difference value are coprime.

As one embodiment, the first threshold is a positive integer.

As one embodiment, the first threshold is a constant.

As one embodiment, the first threshold is 7.

As one embodiment, the first threshold is 8.

As one embodiment, the first threshold is 9.

As one embodiment, the first threshold is 10.

As one embodiment, the first threshold is 11.

As one embodiment, the first threshold is 12.

As one embodiment, the first threshold is 13.

As one embodiment, the first threshold is 14.

As one embodiment, the first threshold is 15.

As one embodiment, the first threshold is 16.

As one embodiment, the first threshold is 17.

As one embodiment, the first threshold is 18.

As one embodiment, the first threshold is 19.

As one embodiment, the first threshold is 20.

As one embodiment, the first threshold is 21.

As one embodiment, the first threshold is 22.

As one embodiment, the first threshold is 23.

As one embodiment, the first threshold is 24.

As one embodiment, the first threshold is 25.

As one embodiment, the first threshold is 26.

As one embodiment, the first threshold is 27.

As one embodiment, the first threshold is 28.

As one embodiment, the first threshold is 29.

As one embodiment, the first threshold is 30.

As one embodiment, the first threshold is not greater than the total number of PRBs included in 1M bandwidth.

As one embodiment, the first threshold is not greater than the total number of PRBs included in 2M bandwidth.

As one embodiment, the first threshold is not greater than the total number of PRBs included in 3M bandwidth.

As one embodiment, the first threshold is not greater than the total number of PRBs included in 4M bandwidth.

As one embodiment, the first threshold is not greater than the total number of PRBs included in 5M bandwidth.

As one embodiment, the first threshold is not greater than the total number of PRBs included in 10M bandwidth.

As one embodiment, the first threshold is not greater than the total number of PRBs included in 20M bandwidth.

As one embodiment, the first threshold is not greater than the total number of PRBs included in 100M bandwidth.

As one embodiment, the first node sends a first information block and then receives a second information block; wherein the first information block comprises UE capability information; based on the first information block, the second information block is used to indicate the first threshold in a first range of numerical values.

As one embodiment, based on the first information block, the second difference value is equal to 1.

As one embodiment, based on the first information block, the second difference value is equal to a positive integer smaller than the first difference value.

As one embodiment, the expression "the first information block comprises UE capability information" comprises: the first information block comprises at least one UE capability information element.

As one embodiment, the name of the first information block comprises RedCap.

As one embodiment, the name of a UE capability information element included in the first information block comprises RedCap.

As one embodiment, the first information block is used to indicate UE capabilities supported by a RedCap UE (a UE with reduced capabilities).

As one embodiment, the first information block is physical layer signaling.

As one embodiment, the first information block comprises physical layer signaling.

As one embodiment, the first information block is downlink control signaling.

As one embodiment, the first information block is dynamically configured.

As one embodiment, the first information block comprises signaling of Layer 1 (L1).

As one embodiment, the first information block comprises control signaling of Layer 1 (L1).

As one embodiment, the first information block comprises one or a plurality of fields in a physical layer signaling.

As one embodiment, the first information block comprises higher layer signaling.

As one embodiment, the first information block comprises one or a plurality of fields in a higher layer signaling.

As one embodiment, the first information block comprises RRC (Radio Resource Control) signaling.

As one embodiment, the first information block comprises a MAC CE (Medium Access Control Layer Control Element).

As one embodiment, the first information block comprises one or a plurality of fields in a RRC signaling.

As one embodiment, the first information block comprises one or a plurality of fields in a MAC CE.

As one embodiment, the first information block comprises one or a plurality of fields in an IE (Information Element).

As one embodiment, the name of the second information block comprises RedCap.

As one embodiment, the name of an information element included in the second information block comprises RedCap.

As one embodiment, the second information block is for a RedCap UE.

As one embodiment, the second information block is physical layer signaling.

As one embodiment, the second information block comprises physical layer signaling.

As one embodiment, the second information block is downlink control signaling.

As one embodiment, the second information block is dynamically configured.

As one embodiment, the second information block comprises signaling of Layer 1 (L1).

As one embodiment, the second information block comprises control signaling of Layer 1 (L1).

As one embodiment, the second information block comprises one or a plurality of fields in a physical layer signaling.

As one embodiment, the second information block comprises higher layer signaling.

As one embodiment, the second information block comprises one or a plurality of fields in a higher layer signaling.

As one embodiment, the second information block comprises RRC (Radio Resource Control) signaling.

As one embodiment, the second information block comprises a MAC CE (Medium Access Control Layer Control Element).

As one embodiment, the second information block comprises one or a plurality of fields in RRC signaling.

As one embodiment, the second information block comprises one or a plurality of fields in a MAC CE.

As one embodiment, the second information block comprises one or a plurality of fields in an IE (Information Element).

As one embodiment, the expression "based on the first information block" comprises: receiving by the first information block at the sending end of the second information block being used to trigger the sending of the second information block.

As one embodiment, the expression "based on the first information block" comprises: the first information block being used to indicate the first range of numerical values.

As one embodiment, the expression "based on the first information block" comprises: the first information block being used to report the first range of numerical values.

As one embodiment, the first range of numerical values comprises a plurality of numerical values.

As one embodiment, the first range of numerical values comprises a plurality of positive integers.

As one embodiment, the first range of numerical values is default.

As one embodiment, the first range of numerical values is predefined.

As one embodiment, the greatest numerical value in the first range of numerical values is 7.

As one embodiment, the greatest numerical value in the first range of numerical values is 8.

As one embodiment, the greatest numerical value in the first range of numerical values is 9.

As one embodiment, the greatest numerical value in the first range of numerical values is 10.

As one embodiment, the greatest numerical value in the first range of numerical values is 11.

As one embodiment, the greatest numerical value in the first range of numerical values is 12.

As one embodiment, the greatest numerical value in the first range of numerical values is 13.

As one embodiment, the greatest numerical value in the first range of numerical values is 14.

As one embodiment, the greatest numerical value in the first range of numerical values is 15.

As one embodiment, the greatest numerical value in the first range of numerical values is 16.

As one embodiment, the greatest numerical value in the first range of numerical values is 17.

As one embodiment, the greatest numerical value in the first range of numerical values is 18.

As one embodiment, the greatest numerical value in the first range of numerical values is 19.

As one embodiment, the greatest numerical value in the first range of numerical values is 20.

As one embodiment, the greatest numerical value in the first range of numerical values is 21.

As one embodiment, the greatest numerical value in the first range of numerical values is 22.

As one embodiment, the greatest numerical value in the first range of numerical values is 23.

As one embodiment, the greatest numerical value in the first range of numerical values is 24.

As one embodiment, the greatest numerical value in the first range of numerical values is 25.

As one embodiment, the greatest numerical value in the first range of numerical values is 26.

As one embodiment, the greatest numerical value in the first range of numerical values is 27.

As one embodiment, the greatest numerical value in the first range of numerical values is 28.

As one embodiment, the greatest numerical value in the first range of numerical values is 29.

As one embodiment, the greatest numerical value in the first range of numerical values is 30.

As one embodiment, the greatest numerical value in the first range of numerical values is not greater than the total number of PRBs included in 1M bandwidth.

As one embodiment, the greatest numerical value in the first range of numerical values is not greater than the total number of PRBs included in 2M bandwidth.

As one embodiment, the greatest numerical value in the first range of numerical values is not greater than the total number of PRBs included in 3M bandwidth.

As one embodiment, the greatest numerical value in the first range of numerical values is not greater than the total number of PRBs included in 4M bandwidth.

As one embodiment, the greatest numerical value in the first range of numerical values is not greater than the total number of PRBs included in 5M bandwidth.

As one embodiment, the greatest numerical value in the first range of numerical values is not greater than the total number of PRBs included in 10M bandwidth.

As one embodiment, the greatest numerical value in the first range of numerical values is not greater than the total number of PRBs included in 20M bandwidth.

As one embodiment, the greatest numerical value in the first range of numerical values is not greater than the total number of PRBs included in 100M bandwidth.

As one embodiment, the sending of the first information block is prior to the receiving of the first signaling.

As one embodiment, the receiving of the second information block is prior to receiving of the first signaling.

### Embodiment 16

Embodiment 16 exemplifies a structural block diagram of a processing apparatus in a first node equipment, as shown in FIG. 16. In FIG. 16, a first node equipment processing apparatus 1600 comprises a first transceiver 1603, wherein the first transceiver 1603 comprises a first receiver 1601 and a first transmitter 1602.

As one embodiment, the first node equipment 1600 is a base station.

As one embodiment, the first node equipment 1600 is a user equipment.

As one embodiment, the first node equipment 1600 is a relay node.

As one embodiment, the first node equipment 1600 is an in-vehicle communication equipment.

As one embodiment, the first node equipment 1600 is a user equipment that supports V2X communication.

As one embodiment, the first node equipment 1600 is a relay node that supports V2X communication.

As one embodiment, the first node equipment 1600 is a user equipment that supports operation on a high frequency spectrum.

As one embodiment, the first node equipment 1600 is a user equipment that supports operation on a shared spectrum.

As one embodiment, the first node equipment 1600 is a user equipment that supports XR service.

As one embodiment, the first node equipment 1600 is a RedCap UE.

As one embodiment, the first node equipment 1600 is a UE with high processing capabilities.

As one embodiment, the first receiver 1601 comprises at least one of the antenna 452, the receiver 454, the multi-antenna receiving processor 458, the receiving processor 456, the controller/processor 459, the memory 460, and the data source 467 in FIG. 4 of the present application.

As one embodiment, the first receiver 1601 comprises at least the first five of the antenna 452, the receiver 454, the multi-antenna receiving processor 458, the receiving processor 456, the controller/processor 459, the memory 460, and the data source 467 in FIG. 4 of the present application.

As one embodiment, the first receiver 1601 comprises at least the first four of the antenna 452, the receiver 454, the multi-antenna receiving processor 458, the receiving processor 456, the controller/processor 459, the memory 460, and the data source 467 in FIG. 4 of the present application.

As one embodiment, the first receiver 1601 comprises at least the first three of the antenna 452, the receiver 454, the multi-antenna receiving processor 458, the receiving processor 456, the controller/processor 459, the memory 460, and the data source 467 in FIG. 4 of the present application.

As one embodiment, the first receiver 1601 comprises at least the first two of the antenna 452, the receiver 454, the multi-antenna receiving processor 458, the receiving processor 456, the controller/processor 459, the memory 460, and the data source 467 in FIG. 4 of the present application.

As one embodiment, the first transmitter 1602 comprises at least one of the antenna 452, the transmitter 454, the multi-antenna transmitter processor 457, the transmitting processor 468, the controller/processor 459, the memory 460, and the data source 467 in FIG. 4 of the present application.

As one embodiment, the first transmitter 1602 comprises at least the first five of the antenna 452, the transmitter 454, the multi-antenna transmitter processor 457, the transmitting processor 468, the controller/processor 459, the memory 460, and the data source 467 in FIG. 4 of the present application.

As one embodiment, the first transmitter 1602 comprises at least the first four of the antenna 452, the transmitter 454, the multi-antenna transmitter processor 457, the transmitting processor 468, the controller/processor 459, the memory 460, and the data source 467 in FIG. 4 of the present application.

As one embodiment, the first transmitter 1602 comprises at least the first three of the antenna 452, the transmitter 454, the multi-antenna transmitting processor 457, the transmitting processor 468, the controller/processor 459, the memory 460, and the data source 467 in FIG. 4 of the present application.

As one embodiment, the first transmitter 1602 comprises at least the first two of the antenna 452, the transmitter 454, the multi-antenna transmitter processor 457, the transmitting processor 468, the controller/processor 459, the memory 460, and the data source 467 in FIG. 4 of the present application.

As one embodiment, the first receiver 1601 receives first signaling, wherein the first signaling is used to determine a target indication value, and the target indication value is a non-negative integer; the first receiver 1601 receives a first signal. or the first transmitter 1602 sends the first signal; wherein a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value and the number of resource blocks occupied by the first signal is related to the reference length value.

As one embodiment, the difference value between any two adjacent numerical values in the second numerical-value set is equal to a second difference value; the second difference value is not equal to the first difference value, and the second difference value is a positive integer.

As one embodiment, the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is equal to the ratio of the reference length value to the second difference value; the first target indication value is equal to 1 or -1, the second target numerical value is equal to a first reference numerical value or the product of the first reference numerical value and -1, the first reference numerical value is equal to one of the size of the initial BWP and the size of CORESET 0, and the third target numerical value is related to the first reference numerical value.

As one embodiment, the cardinal number of the first numerical-value set is equal to the first reference numerical value, and the cardinal number of the second numerical-value set is not greater than the cardinal number of the first numerical-value set.

As one embodiment, the first difference value is greater than the second difference value.

As one embodiment, the first difference value is related to the size of the activated BWP.

As one embodiment, the second difference value is equal to 1 or related to the capabilities of the first node.

As one embodiment, the index of the starting resource block occupied by the first signal is equal to the reference start index value and the number of the resource blocks occupied by the first signal is equal to the reference length value.

As one embodiment, the reference start index value is equal to a non-negative integer multiple of the first difference value.

As one embodiment, the reference length value and the first difference value satisfy the following relationship: the remainder obtained by dividing the reference length value by the first difference value is greater than zero.

As one embodiment, the reference length value and the first difference value are coprime.

As one embodiment, the first signaling comprises a first field, wherein the first field in the first signaling is used to determine the target indication value; the first field in the first signaling in the range of values for an RIV is a first indication-value set, the first indication-value set comprises a plurality of indication values, and each indication value in the first indication-value set corresponds to a first type start index value and a first type length value; for any indication value in the first indication-value set: the corresponding first type start index value is equal to one numerical value in the first numerical-value set and the corresponding first type length value is equal to one numerical value in the second numerical-value set.

As one embodiment, the target indication value is any indication value in the first indication-value set; the reference start index value is the first type start index value corresponding to the target indication value, and the reference length value is the first type length value corresponding to the target indication value.

As one embodiment, the first receiver 1601 receives first signaling, wherein the first signaling is used to determine a target indication value, and the target indication value is a non-negative integer; the first receiver 1601 receives a first signal, or the first transmitter 1602 sends the first signal; wherein the first difference value is related to the size of a BWP, and the first difference value is a positive integer greater than 1; the reference start index value is the index of a starting resource block occupied by the first signal, the target indication value has a corresponding relationship with the reference start index value, wherein the corresponding relationship between the target indication value and the reference start index value is related to the first difference value; the reference length value is the number of resource blocks occupied by the first signal, and the reference length value and the first difference value satisfy the following relationship: the remainder obtained by dividing the reference length value by the first difference value is greater than zero.

As one embodiment, the reference start index value is equal to a non-negative integer multiple of the first difference value.

As one embodiment, the target indication value corresponds to the reference start index value and the reference length value.

As one embodiment, the reference length value depends on the target indication value

As one embodiment, the expression "the target indication value has a corresponding relationship with the reference start index value, wherein the corresponding relationship between the target indication value and the reference start index value is related to the first difference value" comprises:
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is a positive integer not greater than the first reference numerical value minus the first intermediate value; the first target indication value is equal to 1 or -1, the second target numerical value is equal to the first reference numerical value or the product of the first reference numerical value and -1, the first reference numerical value is equal to one of the size of the initial BWP and the size of CORESET 0, and the third target numerical value is related to the first reference numerical value.

As one embodiment, the expression "the target indication value has a corresponding relationship with the reference start index value, wherein the corresponding relationship between the target indication value and the reference start index value is related to the first difference value" comprises:
the target indication value is equal to the first intermediate value plus the product of the first reference numerical value and the second intermediate value minus the first reference numerical value; the first intermediate value is equal to the ratio of the reference start index value to the first difference value, the second intermediate value is a positive integer not greater than the first reference numerical value minus the first intermediate value; the first reference numerical value is equal to one of the size of the initial BWP and the size of CORESET 0.

As one embodiment, the expression "the target indication value has a corresponding relationship with the reference start index value, wherein the corresponding relationship between the target indication value and the reference start index value is related to the first difference value" comprises:
the target indication value is equal to a third target numerical value minus the first intermediate value minus the product of the first reference numerical value and the second intermediate value; the first intermediate value is equal to the ratio of the reference start index value to the first difference value, the second intermediate value is a positive integer not greater than the first reference numerical value minus the first intermediate value; the first reference value is equal to one of the size of the initial BWP and the size of CORESET 0; the third target numerical value is related to the first reference numerical value.

As one embodiment, the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is equal to the ratio of the reference length value to the second difference value, and the second difference value is a positive integer; the first target indication value is equal to one of 1 and -1, the second target numerical value is equal to one of a first reference numerical value and the product of the first reference numerical value and -1, the first reference numerical value is equal to one of the size of the initial BWP and the size of CORESET 0, and the third target numerical value is related to the first reference numerical value.

As one embodiment, the first signaling comprises a first field, wherein the first field in the first signaling is used to determine the target indication value; the first field in the first signaling in the range of values for an RIV is a first indication-value set, the first indication-value set comprises a plurality of indication values, and each indication value in the first indication-value set corresponds to a first type start index value and a first type length value; for any indication value in the first indication-value set: the corresponding first type start index value is equal to one numerical value in the first numerical-value set and the corresponding first type length value is equal to one numerical value in the second numerical-value set.

As one embodiment, the target indication value is any indication value in the first indication-value set; the reference start index value is the first type start index value corresponding to the target indication value, and the reference length value is the first type length value corresponding to the target indication value.

As one embodiment, the difference value between any two adjacent numerical values in the second numerical-value set is equal to a second difference value; the second difference value is not equal to the first difference value, and the second difference value is a positive integer.

As one embodiment, the cardinal number of the first numerical-value set is equal to the first reference numerical value, and the cardinal number of the second numerical-value set is not greater than the cardinal number of the first numerical-value set.

As one embodiment, the first difference value is greater than the second difference value.

As one embodiment, the first difference value is related to the size of the activated BWP.

As one embodiment, the second difference value is equal to 1 or related to the capabilities of the first node.

As one embodiment, the reference start index value is equal to a non-negative integer multiple of the first difference value.

As one embodiment, the reference length value and the first difference value are coprime.

As one embodiment, the first receiver 1601 receives first signaling, wherein the first signaling is used to determine a target indication value, and the target indication value is a non-negative integer; wherein the first difference value is related to the size of a BWP, and the first difference value is a positive integer greater than 1; the reference start index value is the index of a starting resource block, the target indication value has a corresponding relationship with the reference start index value, wherein the corresponding relationship between the target indication value and the reference start index value is related to the first difference value; the reference length value is the number of assigned resource blocks, the target indication value corresponds to the reference length value, and the remainder obtained by dividing one numerical value in the range of values for the reference length value by the first difference value is greater than zero.

As one embodiment, the remainder obtained by dividing the reference length value by the first difference value is greater than zero.

As one embodiment, the numerical values in the range of values for the reference start index value are all non-negative integer multiples of the first difference value.

As one embodiment, the first receiver 1601 receives a first signal, or the first transmitter 1602 sends the first signal; wherein the reference start index value is the index of a starting resource block occupied by the first signal, and the reference length value is the number of resource blocks assigned to the first signal.

### Embodiment 17

Embodiment 17 exemplifies a structural block diagram of a processing apparatus in a second node equipment, as shown in FIG. 17. In FIG. 17, a second node equipment processing apparatus 1700 comprises a second transceiver 1703, and the second transceiver 1703 comprises a second transmitter 1701 and a second receiver 1702.

As one embodiment, the second node equipment 1700 is a user equipment.

As one embodiment, the second node equipment 1700 is a base station.

As one embodiment, the second node equipment 1700 is a satellite device.

As one embodiment, the second node equipment 1700 is a relay node.

As one embodiment, the second node equipment 1700 is an in-vehicle communication equipment.

As one embodiment, the second node equipment 1700 is a user equipment that supports V2X communication.

As one embodiment, the second node equipment 1700 is an equipment that supports operation on a high frequency spectrum.

As one embodiment, the second node equipment 1700 is an equipment that supports operation on a shared spectrum.

As one embodiment, the second node equipment 1700 is an equipment that supports XR service.

As one embodiment, the second node equipment 1700 is one of a test apparatus, a test equipment, and a test instrument.

As one embodiment, the second transmitter 1701 comprises at least one of the antenna 420, the transmitter 418, the multi-antenna transmitting processor 471, the transmitting processor 416, the controller/processor 475, and the memory 476 in FIG. 4 of the present application.

As one embodiment, the second transmitter 1701 comprises at least one of the first five of the antenna 420, the transmitter 418, the multi-antenna transmitting processor 471, the transmitting processor 416, the controller/processor 475, and the memory 476 in FIG. 4 of the present application.

As one embodiment, the second transmitter 1701 comprises at least the first four of the antenna 420, the transmitter 418, the multi-antenna transmitting processor 471, the transmitting processor 416, the controller/processor 475, and the memory 476 in FIG. 4 of the present application.

As one embodiment, the second transmitter 1701 comprises at least the first three of the antenna 420, the transmitter 418, the multi-antenna transmitting processor 471, the transmitting processor 416, the controller/processor 475, and the memory 476 in FIG. 4 of the present application.

As one embodiment, the second transmitter 1701 comprises at least the first two of the antenna 420, the transmitter 418, the multi-antenna transmitting processor 471, the transmitting processor 416, the controller/processor 475, and the memory 476 in FIG. 4 of the present application.

As one embodiment, the second receiver 1702 comprises at least one of the antenna 420, the receiver 418, the multi-antenna receiving processor 472, the receiving processor 470, the controller/processor 475, and the memory 476 in FIG. 4 of the present application.

As one embodiment, the second receiver 1702 comprises at least the first five of the antenna 420, the receiver 418, the multi-antenna receiving processor 472, the receiving processor 470, the controller/processor 475, and the memory 476 in FIG. 4 of the present application.

As one embodiment, the second receiver 1702 comprises at least the first four of the antenna 420, the receiver 418, the multi-antenna receiving processor 472, the receiving processor 470, the controller/processor 475, and the memory 476 in FIG. 4 of the present application.

As one embodiment, the second receiver 1702 comprises at least the first three of the antenna 420, the receiver 418, the multi-antenna receiving processor 472, the receiving processor 470, the controller/processor 475, and the memory 476 in FIG. 4 of the present application.

As one embodiment, the second receiver 1702 comprises at least the first two of the antenna 420, the receiver 418, the multi-antenna receiving processor 472, the receiving processor 470, the controller/processor 475, and the memory 476 in FIG. 4 of the present application.

As one embodiment, the second transmitter 1701 sends first signaling, wherein the first signaling is used to determine a target indication value, and the target indication value is a non-negative integer; the second transmitter 1701 sends a first signal, or the second receiver 1702 receives the first signal; wherein a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value and the number of resource blocks occupied by the first signal is related to the reference length value.

As one embodiment, the difference value between any two adjacent numerical values in the second numerical-value set is equal to a second difference value; the second difference value is not equal to the first difference value, and the second difference value is a positive integer.

As one embodiment, the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is equal to the ratio of the reference length value to the second difference value; the first target indication value is equal to 1 or -1, the second target numerical value is equal to a first reference numerical value or the product of the first reference numerical value and -1, the first reference numerical value is equal to one of the size of the initial BWP and the size of CORESET 0, and the third target numerical value is related to the first reference numerical value.

As one embodiment, the cardinal number of the first numerical-value set is equal to the first reference numerical value, and the cardinal number of the second numerical-value set is not greater than the cardinal number of the first numerical-value set.

As one embodiment, the first difference value is greater than the second difference value.

As one embodiment, the first difference value is related to the size of the activated BWP.

As one embodiment, the second difference value is equal to 1 or related to the capabilities of the first node.

As one embodiment, the index of the starting resource block occupied by the first signal is equal to the reference start index value and the number of the resource blocks occupied by the first signal is equal to the reference length value.

As one embodiment, the reference start index value is equal to a non-negative integer multiple of the first difference value.

As one embodiment, the reference length value and the first difference value satisfy the following relationship: the remainder obtained by dividing the reference length value by the first difference value is greater than zero.

As one embodiment, the reference length value and the first difference value are coprime.

As one embodiment, the first signaling comprises a first field, wherein the first field in the first signaling is used to determine the target indication value; the first field in the first signaling in the range of values for an RIV is a first indication-value set, the first indication-value set comprises a plurality of indication values, and each indication value in the first indication-value set corresponds to a first type start index value and a first type length value; for any indication value in the first indication-value set: the corresponding first type start index value is equal to one numerical value in the first numerical-value set and the corresponding first type length value is equal to one numerical value in the second numerical-value set.

As one embodiment, the target indication value is any indication value in the first indication-value set; the reference start index value is the first type start index value corresponding to the target indication value, and the reference length value is the first type length value corresponding to the target indication value.

As one embodiment, the second transmitter 1701 sends first signaling, wherein the first signaling is used to determine a target indication value, and the target indication value is a non-negative integer; the second transmitter 1701 sends a first signal, or the second receiver 1702 receives the first signal; wherein the first difference value is related to the size of a BWP, and the first difference value is a positive integer greater than 1; the reference start index value is the index of a starting resource block occupied by the first signal, the target indication value has a corresponding relationship with the reference start index value, wherein the corresponding relationship between the target indication value and the reference start index value is related to the first difference value; the reference length value is the number of resource blocks occupied by the first signal, and the reference length value and the first difference value satisfy the following relationship: the remainder obtained by dividing the reference length value by the first difference value is greater than zero.

As one embodiment, the reference start index value is equal to a non-negative integer multiple of the first difference value.

As one embodiment, the target indication value corresponds to the reference start index value and the reference length value.

As one embodiment, the reference length value depends on the target indication value.

As one embodiment, the expression "the target indication value has a corresponding relationship with the reference start index value, wherein the corresponding relationship between the target indication value and the reference start index value is related to the first difference value" comprises:
the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is a positive integer not greater than the first reference numerical value minus the first intermediate value; the first target indication value is equal to 1 or -1, the second target numerical value is equal to the first reference numerical value or the product of the first reference numerical value and -1, the first reference numerical value is equal to one of the size of the initial BWP and the size of CORESET 0, and the third target numerical value is related to the first reference numerical value.

As one embodiment, the expression "the target indication value has a corresponding relationship with the reference start index value, wherein the corresponding relationship between the target indication value and the reference start index value is related to the first difference value" comprises:
the target indication value is equal to the first intermediate value plus the product of the first reference numerical value and the second intermediate value minus the first reference numerical value; the first intermediate value is equal to the ratio of the reference start index value to the first difference value, the second intermediate value is a positive integer not greater than the first reference numerical value minus the first intermediate value; the first reference numerical value is equal to one of the size of the initial BWP and the size of CORESET 0.

As one embodiment, the expression "the target indication value has a corresponding relationship with the reference start index value, wherein the corresponding relationship between the target indication value and the reference start index value is related to the first difference value" comprises:
the target indication value is equal to a third target numerical value minus the first intermediate value minus the product of the first reference numerical value and the second intermediate value; the first intermediate value is equal to the ratio of the reference start index value to the first difference value, the second intermediate value is a positive integer not greater than the first reference numerical value minus the first intermediate value; the first reference value is equal to one of the size of the initial BWP and the size of CORESET 0; the third target numerical value is related to the first reference numerical value.

As one embodiment, the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is equal to the ratio of the reference length value to the second difference value, and the second difference value is a positive integer; the first target indication value is equal to one of 1 and -1, the second target numerical value is equal to one of a first reference numerical value and the product of the first reference numerical value and -1, the first reference numerical value is equal to one of the size of the initial BWP and the size of CORESET 0, and the third target numerical value is related to the first reference numerical value.

As one embodiment, the first signaling comprises a first field, wherein the first field in the first signaling is used to determine the target indication value; the first field in the first signaling in the range of values for an RIV is a first indication-value set, the first indication-value set comprises a plurality of indication values, and each indication value in the first indication-value set corresponds to a first type start index value and a first type length value; for any indication value in the first indication-value set: the corresponding first type start index value is equal to one numerical value in the first numerical-value set and the corresponding first type length value is equal to one numerical value in the second numerical-value set.

As one embodiment, the target indication value is any indication value in the first indication-value set; the reference start index value is the first type start index value corresponding to the target indication value, and the reference length value is the first type length value corresponding to the target indication value.

As one embodiment, the difference value between any two adjacent numerical values in the second numerical-value set is equal to a second difference value; the second difference value is not equal to the first difference value, and the second difference value is a positive integer.

As one embodiment, the cardinal number of the first numerical-value set is equal to the first reference numerical value, and the cardinal number of the second numerical-value set is not greater than the cardinal number of the first numerical-value set.

As one embodiment, the first difference value is greater than the second difference value.

As one embodiment, the first difference value is related to the size of the activated BWP.

As one embodiment, the second difference value is equal to 1 or is related to the capability of the receiver of the first signaling.

As one embodiment, the reference start index value is equal to a non-negative integer multiple of the first difference value.

As one embodiment, the reference length value and the first difference value are coprime.

As one embodiment, the second transmitter 1701 sends first signaling, wherein the first signaling is used to determine a target indication value, and the target indication value is a non-negative integer; wherein the first difference value is related to the size of a BWP, and the first difference value is a positive integer greater than 1; the reference start index value is the index of a starting resource block, the target indication value has a corresponding relationship with the reference start index value, wherein the corresponding relationship between the target indication value and the reference start index value is related to the first difference value; the reference length value is the number of assigned resource blocks, the target indication value corresponds to the reference length value, and the remainder obtained by dividing one numerical value in the range of values for the reference length value by the first difference value is greater than zero.

As one embodiment, the remainder obtained by dividing the reference length value by the first difference value is greater than zero.

As one embodiment, the numerical values in the range of values for the reference start index value are all non-negative integer multiples of the first difference value.

As one embodiment, the second transmitter 1701 sends a first signal, or the second receiver 1702 receives the first signal; wherein the reference start index value is the index of a starting resource block occupied by the first signal and the reference length value is the number of resource blocks assigned to the first signal.

Those of ordinary skill in the art may appreciate that all or part of the steps in the methods described above may be accomplished by a program instructing related hardware, and the program may be stored in computer-readable storage media, such as read-only memory, hard disk, optical disk and the like. Optionally, all or part of the steps of the embodiments described above may also be implemented using one or a plurality of integrated circuits. Accordingly, the various module units in the embodiments described above may be implemented in the form of hardware or in the form of software function modules. The present application is not limited to the combination of software and hardware of any particular form. The first node equipment in the present application includes, but is not limited to, mobile phones, tablets, notebooks, Internet cards, low-power equipment, eMTC equipment, NB-IoT equipment, in-vehicle communication equipment, aircraft, airplanes, unmanned aerial vehicles, radio-controlled aircraft and other wireless communication equipment. The second node equipment in the present application includes, but is not limited to, mobile phones, tablets, notebooks, Internet cards, low-power equipment, eMTC equipment, NB-IoT equipment, in-vehicle communication equipment, aircraft, airplanes, unmanned aerial vehicles, radio-controlled aircraft and other wireless communication equipment. The user equipment or UE or terminal in the present application includes, but is not limited to, mobile phones, tablets, notebooks, Internet cards, low-power equipment, eMTC equipment, NB-IoT equipment, in-vehicle communication equipment, aircraft, airplanes, unmanned aerial vehicles, radio-controlled aircraft and other wireless communication equipment. The base station equipment or base station or network-side equipment in the present application includes, but is not limited to, macrocell base stations, microcell base stations, femtocell base stations, relay base stations, eNBs, gNBs, transmit and receive points TRPs, GNSSs, relay satellites, satellite base stations, air base stations, test apparatuses, test equipment, test instruments and other equipment.

It will be appreciated by those skilled in the art that the present disclosure may be implemented in other specified forms that do not deviate from the core or essential features thereof. Thus, the presently disclosed embodiments should in any event be considered descriptive rather than limiting. The scope of the invention is determined by the appended claims, not by the preceding description, and all changes within their equivalent meaning and area are considered to be included therein.

## Claims

1. A first node used in wireless communication, **characterized in that**, the node comprises:
a first receiver receiving first signaling, wherein the first signaling is used to determine a target indication value, and the target indication value is a non-negative integer;
a first transceiver receiving a first signal, or sending the first signal;
wherein a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value, and the number of resource blocks occupied by the first signal is related to the reference length value.

2. The first node according to Claim 1, **characterized in that** the difference value between any two adjacent numerical values in the second numerical-value set is equal to a second difference value; the second difference value is not equal to the first difference value, and the second difference value is a positive integer.

3. The first node according to Claim 2, **characterized in that** the target indication value is equal to the product of a first target numerical value and a first intermediate value plus the product of a second target numerical value and a second intermediate value plus a third target numerical value; the first intermediate value is equal to the ratio of the reference start index value to the first difference value, the second intermediate value is equal to the ratio of the reference length value to the second difference value; the first target indication value is equal to 1 or -1, the second target numerical value is equal to a first reference numerical value and the product of the first reference numerical value or -1, the first reference numerical value is equal to one of the size of the initial BWP and the size of CORESET 0, and the third target numerical value is related to the first reference numerical value.

4. The first node according to Claim 3, **characterized in that** the cardinal number of the first numerical-value set is equal to the first reference numerical value, and the cardinal number of the second numerical-value set is not greater than the cardinal number of the first numerical-value set.

5. The first node according to any one of Claims 2 to 4, **characterized in that** the first difference value is greater than the second difference value, and the first difference value is related to the size of the activated BWP, and the second difference value is equal to 1 or related to the capabilities of the first node.

6. The first node according to any one of Claims 1 to 5, **characterized in that** the index of the starting resource block occupied by the first signal is equal to the reference start index value and the number of the resource blocks occupied by the first signal is equal to the reference length value.

7. The first node according to any one of Claims 1 to 6, **characterized in that** the reference start index value is equal to a non-negative integer multiple of the first difference value; the reference length value and the first difference value satisfy the following relationship: the remainder obtained by dividing the reference length value by the first difference value is greater than zero.

8. A second node used in wireless communication, **characterized in that** the node comprises:
a second transmitter sending first signaling, wherein the first signaling is used to determine a target indication value, and the target indication value is a non-negative integer;
a second transceiver sending a first signal, or receiving the first signal;
wherein a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value, and the number of resource blocks occupied by the first signal is related to the reference length value.

9. A method used in a first wireless communication node, **characterized in that** the method comprises:
receiving first signaling, wherein the first signaling is used for determining a target indication value, and the target indication value is a non-negative integer;
receiving a first signal, or sending the first signal;
wherein a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value, and the number of resource blocks occupied by the first signal is related to the reference length value.

10. A method used in a second wireless communication node, **characterized in that** the method comprises:
sending first signaling, wherein the first signaling is used for determining a target indication value, and the target indication value is a non-negative integer;
sending a first signal, or receiving the first signal;
wherein a first numerical-value set comprises a plurality of numerical values, and the first numerical-value set is related to at least one of the size of a BWP and the size of a CORESET; the difference value between any two adjacent numerical values in the first numerical-value set is equal to a first difference value, and the first difference value is a positive integer greater than 1; a second numerical-value set comprises a plurality of numerical values, the numerical values in the second numerical-value set are all positive integers, and at least one numerical value in the second numerical-value set is not a multiple of the first difference value; the target indication value corresponds to a reference start index value and a reference length value, the reference start index value is equal to one numerical value in the first numerical-value set, and the reference length value is equal to one numerical value in the second numerical-value set; a starting resource block occupied by the first signal is related to the reference start index value, and the number of resource blocks occupied by the first signal is related to the reference length value.
